# EUROPEAN PATENT APPLICATION

(11) **EP 2 378 750 A1**
(43) Date of publication of application: **19.10.2011**
(21) Application number: 10195744.7
(22) Date of filing: 17.12.2010
(51) Int. Cl.: H04M 1/725, G06Q 10/00

(54) **Mobile terminal and message list displaying method therein**

(30) Priority: 14.04.2010 KR 20100034181; 03.05.2010 KR 20100041354; 01.06.2010 KR 20100051643
(71) Applicant: LG Electronics Inc., Seoul 150-721 (KR)
(72) Inventor: You, Sun, 153-801, Seoul (KR); Kim, Moo Sung, 153-801, Seoul (KR); Lee, Choon Jae, 153-801, Seoul (KR); Cho, Min Haeng, 153-801, Seoul (KR); Chang, Jin A, 153-801, Seoul (KR); Kim, Moon Ju, 153-801, Seoul (KR); Han, Seung Heon, 153-801, Seoul (KR); Hong, Na Young, 153-801, Seoul (KR); Lee, Eun Sang, 153-801, Seoul (KR); Chung, Jin Woo, 153-801, Seoul (KR)
(74) Representative: Cabinet Plasseraud

(57) **Abstract**

A mobile terminal and message list displaying method therein are disclosed, by which a message item of a counterpart terminal, or an unchecked message, having sent an unchecked message may be displayed at a specific point on a message list regardless of an reference arrangement of message items. This may include receiving at least one message from each counterpart terminal, generating the message list including at least one message item corresponding to each counterpart terminal, determining whether an unchecked message exists in the received at least one message, and when the unchecked message exists as a result of the determining, displaying the generated message list by displaying the message item corresponding to the counterpart terminal having transmitted the unchecked message at a specific position in the message list regardless of an reference arrangement of the message item.
Additional keywords: Mail or Email or message client; unread messages have priority location in list of received messages; ranking of emails.

## Description

### FIELD OF THE INVENTION

The present invention relates to the field of mobile terminals.

### BACKGROUND OF THE INVENTION

Terminals may be classified into mobile/portable terminals and stationary terminals. Mobile terminals may be classified into handheld terminals and vehicle mount terminals based on a possibility of a user's direct portability.

The terminal may be implemented as a multimedia player provided with functions such as photographing of photos or moving pictures, playback of music or moving picture files, game play, broadcast reception and/or the like, for example.

In displaying a message list, a mobile terminal may display a message list including messages sorted in order of a received hour of the corresponding message.

However, since a received message is sorted in order of a reception hour regardless of a presence or non-presence of a message check, it may be inconvenient for a user to check a message list to determine unchecked messages one by one.

In displaying a counterpart based message list, the mobile terminal may display a message item corresponding to each counterpart.

However, since it is unable to display a message item corresponding to a group including a plurality of counterparts, there may be a demand for managing messages by a unit of group in a manner of grouping the counterparts into groups.

In displaying messages transceived with a specific counterpart terminal, the terminal may sort and display messages based on the corresponding transceived hour and may display an input window of a message, which may be sent to the specific counterpart terminal, on a prescribed region of a screen.

However, according to the related art, considering that a common point of transmission exists between a transmitted message and an input window for receiving a message to be transmitted, a received message should match its displaying method.

### BRIEF DESCRIPTION OF THE DRAWINGS

Arrangements and embodiments may be described in detail with reference to the following drawings in which like reference numerals refer to like elements and wherein:

FIG. 1 is a block diagram of a mobile terminal according to one embodiment;

FIG. 2A is a front perspective diagram of a mobile terminal according to one embodiment;

FIG. 2B is a rear perspective diagram of a mobile terminal according to one embodiment;

FIG. 3 is a first flowchart for a method of displaying a message list in a mobile terminal according to one embodiment;

FIG. 4 is a screen configuration for a process for selecting a menu item corresponding to a message list view;

FIGs. 5A to 5D are screen configurations for displaying an unchecked item at a specific position on a received message list;

FIGs. 6A to 6C are screen configurations for displaying an unchecked item at a specific position on a transceived message list;

FIG. 7A and FIG. 7B are screen configurations for a method of sorting unchecked items in case that a plurality of counterpart terminals having unchecked messages exist therein;

FIG. 8A and FIG. 8B are screen configurations for distinguishably displaying unchecked items on a message list;

FIGs. 9A to 9E are screen configurations for displaying a message list per counterpart in case that a specific unchecked item is selected from a message list;

FIG. 10A and FIG. 10B are screen configurations for outputting information for indicating a reception of an unchecked message;

FIG. 11 is a second flowchart for a method of displaying a message list in a mobile terminal according to one embodiment of the present invention;

FIG. 12A and FIG. 12B are screen configurations for entering a menu for designating a priority counterpart terminal;

FIGs. 13A and 13C are screen configurations for displaying a message item of a priority counter terminal previously designated via a menu search at a specific position on a menu list;

FIGs. 14A to 14C are screen configurations for designating a priority counterpart terminal in a message list display mode and then displaying it at a specific position according to the present invention;

FIG. 15 is a third flowchart for a method of displaying a message list in a mobile terminal according to one embodiment of the present invention;

FIGs. 16A to 20C are screen configurations for configuring a group including at least two counterparts;

FIGs. 21A to 22C are screen configurations for releasing a group including at least two counterparts;

FIG. 23A and FIG. 23B are screen configurations for displaying a message list including messages transceived with at least two counterparts belonging to a specific group;

FIGs. 24A to 25B are screen configurations for a case of deleting a specific one of at least two counterparts belonging to a specific group;

FIGs. 26A to 26C are screen configurations for automatically configuring a group including a plurality of counterparts in case of sending a message to a plurality of the counterparts;

FIG. 27 is a flowchart for a method of displaying a message in a mobile terminal according to one embodiment of the present invention;

FIGs. 28A to 28D are screen configurations for displaying a transmission display window and an input window in a manner of being distinguished from a reception display window using the same indicator;

FIGs. 29A to 29C are screen configurations for distinguishably displaying a transmission display window and a reception display window by a predetermined term unit;

FIG. 30A and FIG. 30B are screen configurations for distinguishably displaying a transmission display window and a reception display window with reference to a specific keyword;

FIGs. 31A to 32B are screen configurations for deleting specific data corresponding to a specific transceiving display window or the specific transceiving display window from a screen;

FIG. 33A and FIG. 33B are screen configurations for distinguishably displaying a reception display window of a received message including a multimedia file;

FIG. 34A and FIG. 34B are configurations for distinguishably displaying a transmission display window and an input window corresponding to a first one of a plurality of specific counterpart terminals;

FIGs. 35A to 35C are screen configurations for outputting a multimedia file on a counterpart list; and

FIGs. 36A to 36E are screen configurations for a process for switching to a transmission display window by shifting a position of an input window gradually in case of sending a message to a specific counterpart terminal.

### DETAILED DESCRIPTION OF THE INVENTION

Embodiments of the present invention may relate to a mobile terminal and message list displaying method.

Embodiments of the present invention may provide a mobile terminal and message list displaying method therein, by which a message item of a counterpart terminal (or an unchecked message) having sent an unchecked message may be displayed at a specific point on a message list regardless of an arrangement reference of message items.

Embodiments of the present invention may provide a mobile terminal and message list displaying method therein, by which a message item of a counterpart terminal (or a message received from a priority counterpart terminal) may be displayed at a specific position on a message list regardless of an arrangement reference of message items.

Embodiments of the present invention may provide a mobile terminal and message list displaying method therein, by which messages transceived with a plurality of counterparts included in one group may be managed as a group rather than being individually managed.

Embodiments of the present invention may provide a mobile terminal and message list displaying method therein, by which a transmission display window and a message input window may be displayed by being distinguished from a reception display window.

Embodiments may provide a mobile terminal that includes a wireless communication unit for receiving at least one message from each counterpart terminal, and a controller for generating a message list including at least one message item corresponding to each counterpart terminal, and a display unit. The controller may determine whether an unchecked message exists in the received at least one message. If the unchecked message exists as a result of the determination, the display unit may display the generated message list under control of the controller, the display unit displaying the message item corresponding to the counterpart terminal having transmitted the unchecked message at a specific position in the message list regardless of an arrangement reference of the message item.

A mobile terminal may include a wireless communication unit receiving at least one message from each counterpart terminal, a user input unit receiving a designation of a priority counterpart terminal from among the at least one counterpart terminal, a controller generating a message list including at least one message item corresponding to each counterpart terminal, and a display unit displaying the generated message list under control of the controller. The display unit may display the message item corresponding to the designated priority counterpart terminal at a specific position in the message list regardless of an arrangement reference of the message item.

A method may display a message list in a mobile terminal. The method may include receiving at least one message from each counterpart terminal, generating the message list including at least one message item corresponding to each counterpart terminal, determining whether an unchecked message exists in the received at least one message, and when the unchecked message exists as a result of the determining, displaying the generated message list by displaying the message item corresponding to the counterpart terminal having transmitted the unchecked message at a specific position in the message list regardless of an arrangement reference of the message item.

A method may display a message list in a mobile terminal. The method may include receiving at least one message from each counterpart terminal, generating a message list including at least one message item corresponding to each counterpart terminal, designating a priority counterpart terminal from among the at least one counterpart terminal, and displaying the generated message list by displaying the message item corresponding to the designated priority counterpart terminal at a specific position in the message list regardless of an arrangement reference of the message item.

In the following detailed description, reference is made to the accompanying drawing figures that form a part hereof, and that show by way of illustration specific embodiments. It is to be understood by those of ordinary skill in this technological field that other embodiments may be utilized, and structural, electrical, as well as procedural changes may be made without departing from the scope of the present invention. Wherever possible, the same reference numbers may be used throughout the drawings to refer to the same or similar parts. The suffixes 'module' and 'unit' for the elements used in the following description are given or used in common by considering facilitation in writing this disclosure only but fail to have meanings or roles discriminated from each other.

Mobile terminals may include a mobile phone, a smart phone, a laptop computer, a digital broadcast terminal, a PDA (personal digital assistants), a PMP (portable multimedia player), a navigation system and/or the like.

Except a case applicable to a mobile terminal only, it is apparent to those skilled in the art that configurations may be applicable to stationary terminals such as a digital TV, a desktop computer and/or the like.

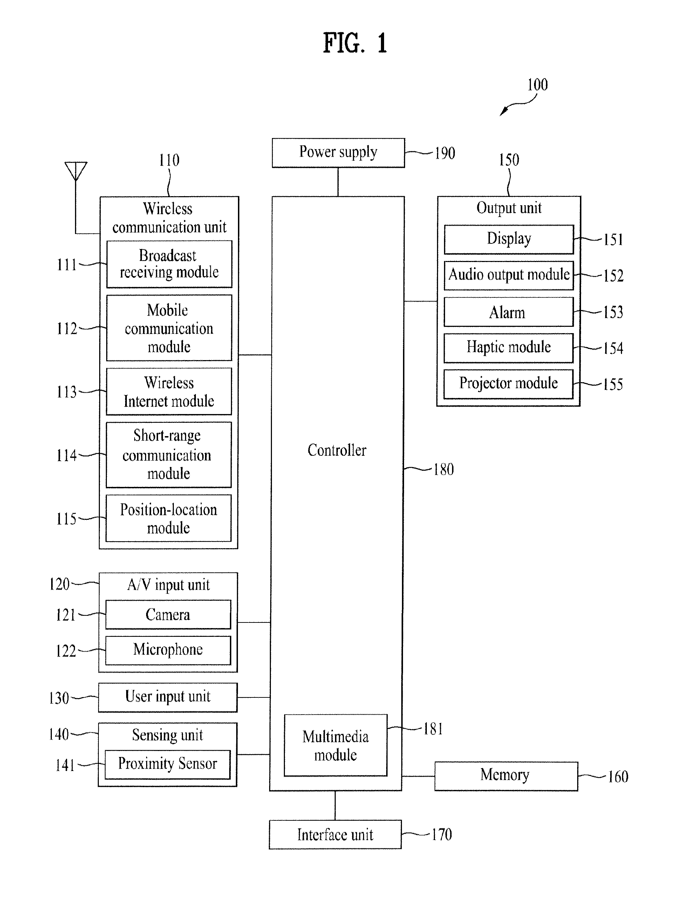

FIG. 1 is a block diagram of a mobile terminal according to one embodiment.

FIG. 1 shows a mobile terminal 100 that includes a wireless communication unit 110, an A/V (audio/video) input unit 120, a user input unit 130, a sensing unit 140, an output unit 150, a memory 160, an interface unit 170, a controller 180, a power supply unit 190 and/or the like. FIG. 1 shows the mobile terminal 100 having various components, although implementing all of the illustrated components is not a requirement. Greater or fewer components may alternatively be implemented.

The wireless communication unit 110 may include one or more components that permit wireless communication between the mobile terminal 100 and a wireless communication system or network within which the mobile terminal 100 is located. For example, the wireless communication unit 110 may include a broadcast receiving module 111, a mobile communication module 112, a wireless internet module 113, a short-range communication module 114, a position-location module 115 and/or the like.

The broadcast receiving module 111 may receive a broadcast signal and/or broadcast associated information from an external broadcast managing server via a broadcast channel.

The broadcast channel may include a satellite channel and a terrestrial channel.

The broadcast managing server may refer to a server that generates and transmits a broadcast signal and/or broadcast associated information or a server that is provided with a previously generated broadcast signal and/or broadcast associated information and then transmits the provided signal or information to a terminal. The broadcast signal may be implemented as a TV broadcast signal, a radio broadcast signal, and a data broadcast signal, among others. If desired, the broadcast signal may further include a broadcast signal combined with a TV or radio broadcast signal.

The broadcast associated information may include information associated with a broadcast channel, a broadcast program, a broadcast service provider, etc. The broadcast associated information may be provided via a mobile communication network. The broadcast associated information may be received by the mobile communication module 112.

The broadcast associated information may be implemented in various forms. For example, broadcast associated information may include an electronic program guide (EPG) of digital multimedia broadcasting (DMB) and electronic service guide (ESG) of digital video broadcast-handheld (DVB-H).

The broadcast receiving module 111 may receive broadcast signals transmitted from various types of broadcast systems. By nonlimiting example, such broadcasting systems may include digital multimedia broadcasting-terrestrial (DMB-T), digital multimedia broadcasting-satellite (DMB-S), digital video broadcast-handheld (DVB-H), the data broadcasting system known as media forward link only (MediaFLO®) and integrated services digital broadcast-terrestrial (ISDB-T). The broadcast receiving module 111 may be suitable for other broadcasting systems as well as the above-explained digital broadcasting systems.

The broadcast signal and/or broadcast associated information received by the broadcast receiving module 111 may be stored in a suitable device, such as the memory 160.

The mobile communication module 112 may transmit/receive wireless signals to/from one or more network entities (e.g., base station, external terminal, server, etc.). Such wireless signals may represent audio, video, and data according to text/multimedia message transceivings, among others.

The wireless internet module 113 may support Internet access for the mobile terminal 100. The wireless internet module 113 may be internally or externally coupled to the mobile terminal 100. In this case, the wireless Internet technology can include WLAN(Wireless LAN) (Wi-Fi), Wibro (Wireless broadband), Wimax (World Interoperability for Microwave Access), HSDPA(High Speed Downlink Packet Access), etc.

The short-range communication module 114 may facilitate relatively short-range communications. Suitable technologies for implementing this module may include radio frequency identification (RFID), infrared data association (IrDA), ultra-wideband (UWB), as well at the networking technologies referred to as Bluetooth and ZigBee, for example.

The position-location module 115 may identify or otherwise obtain the location of the mobile terminal 100. The position-location module 115 may be implemented with a global positioning system (GPS) module.

The audio/video (A/V) input unit 120 may provide audio or video signal input to the mobile terminal 100. As shown, the AN input unit 120 may include a camera 121 and a microphone 122. The camera 121 may receive and process image frames of still pictures or video, which are obtained by an image sensor in a video call mode or a photographing mode. The processed image frames may be displayed on the display 151.

The image frames processed by the camera 121 may be stored in the memory 160 or may be externally transmitted via the wireless communication unit 110. Optionally, at least two cameras 121 may be provided to the mobile terminal 100 based on environment of usage.

The microphone 122 may receive an external audio signal while the portable device is in a particular mode, such as a phone call mode, a recording mode and a voice recognition. This audio signal is processed and converted into electric audio data. The processed audio data is transformed into a format transmittable to a mobile communication base station via the mobile communication module 112 in case of a call mode. The microphone 122 may include assorted noise removing algorithms to remove noise generated in the course of receiving the external audio signal.

The user input unit 130 may generate input data responsive to user manipulation of an associated input device or devices. Examples of such devices include a keypad, a dome switch, a touchpad (e.g., static pressure/capacitance), a jog wheel, a jog switch, etc.

The sensing unit 140 may provide sensing signals for controlling operations of the mobile terminal 100 using status measurements of various aspects of the mobile terminal 100. For example, the sensing unit 140 may detect an open/close status of the mobile terminal 100, relative positioning of components (e.g., a display and keypad) of the mobile terminal 100, a change of position of the mobile terminal 100 or a component of the mobile terminal 100, a presence or absence of user contact with the mobile terminal 100, orientation or acceleration/deceleration of the mobile terminal 100. As an example, the mobile terminal 100 may be configured as a slide-type mobile terminal. In this configuration, the sensing unit 140 may sense whether a sliding portion of the mobile terminal is open or closed. Other examples include the sensing unit 140 sensing the presence or absence of power provided by the power supply 190, the presence or absence of a coupling or other connection between the interface unit 170 and an external device. The sensing unit 140 can include a proximity sensor 141.

The output unit 150 may generate outputs relevant to the senses of sight, hearing, touch and/or the like. The output unit 150 may include the display 151, an audio output module 152, an alarm 153, a haptic module 154, a projector module 155 and/or the like.

The display 151 may visually display (output) information associated with the mobile terminal 100. For example, if the mobile terminal 100 is operating in a phone call mode, the display 151 may provide a user interface (UI) or graphical user interface (GUI) that includes information associated with placing, conducting, and/or terminating a phone call. As another example, if the mobile terminal 100 is in a video call mode or a photographing mode, the display 151 may additionally or alternatively display images that are associated with these modes, the UI or the GUI.

The display 151 may be implemented using known display technologies including a liquid crystal display (LCD), a thin film transistor-liquid crystal display (TFT-LCD), an organic light-emitting diode display (OLED), a flexible display and a three-dimensional display, for example. The mobile terminal 100 may include one or more of such displays.

Some of the above displays may be implemented in a transparent or optical transmittive type, which may be named a transparent display. Examples of the transparent display include a TOLED (transparent OLED) and/or the like. A rear configuration of the display 151 may be implemented in the optical transmittive type as well. In this configuration, a user may see an object in rear of a terminal body via the area occupied by the display 151 of the terminal body.

At least two displays 151 may be provided to the mobile terminal 100 in accordance with the implemented configuration of the mobile terminal 100. For example, a plurality of displays may be arranged on a single face of the mobile terminal 100 by being spaced apart from each other or by being built in one body. Alternatively, a plurality of displays may be arranged on different faces of the mobile terminal 100.

When the display 151 and a sensor for detecting a touch action (hereafter called a touch sensor) are configured in a mutual layer structure (hereafter called a touchscreen), the display 151 may be used as an input device as well as an output device. The touch sensor may be configured as a touch film, a touch sheet, a touchpad and/or the like.

The touch sensor may be configured to convert a pressure applied to a specific portion of the display 151 or a variation of a capacitance generated from a specific portion of the display 151 to an electric input signal. Moreover, it is able to configure the touch sensor may detect a pressure of a touch as well as a touched position or size.

If a touch input is made to the touch sensor, signal(s) corresponding to the touch may be transferred to a touch controller. The touch controller may process the signal(s) and then transfer the processed signal(s) to the controller 180. Therefore, the controller 180 may know whether a prescribed portion of the display 151 is touched.

A proximity sensor (not shown) may be provided to an internal area of the mobile terminal 100 enclosed by the touchscreen or around the touchscreen. The proximity sensor may detect a presence or non-presence of an object approaching a prescribed detecting surface or an object existing around the proximity sensor using an electromagnetic field strength or infrared ray without mechanical contact. The proximity sensor may have durability longer than that of a contact type sensor and also have a utility greater than that of the contact type sensor.

The proximity sensor may include one of a transmittive photoelectric sensor, a direct reflective photoelectric sensor, a mirror reflective photoelectric sensor, a radio frequency oscillation proximity sensor, an electrostatic capacity proximity sensor, a magnetic proximity sensor, an infrared proximity sensor and/or the like. In an example that the touchscreen includes the electrostatic capacity proximity sensor, it is configured to detect proximity of a pointer using a variation of electric field based on proximity of the pointer. In this example, the touchscreen (touch sensor) may be classified as the proximity sensor.

In the following description, an action that a pointer approaches without contacting with the touchscreen to be recognized as located on the touchscreen is named a proximity touch. An action that a pointer actually touches the touchscreen is named a contact touch. The meaning of the position on the touchscreen proximity-touched by the pointer means the position of the pointer that vertically opposes the touchscreen when the pointer performs the proximity touch.

The proximity sensor may detect a proximity touch and a proximity touch pattern (e.g., a proximity touch distance, a proximity touch duration, a proximity touch position, a proximity touch shift state, etc.). Information corresponding to the detected proximity touch action and the detected proximity touch pattern may be outputted to the touchscreen.

The audio output module 152 may function in various modes including a call-receiving mode, a call-placing mode, a recording mode, a voice recognition mode, a broadcast reception mode and/or the like to output audio data that is received from the wireless communication unit 110 or is stored in the memory 160. During operation, the audio output module 152 outputs audio relating to a particular function (e.g., call received, message received, etc.). The audio output module 152 may be implemented using one or more speakers, buzzers, other audio producing devices, and/or combinations thereof.

The alarm 153 may output a signal for announcing an occurrence of a particular event associated with the mobile terminal 100. Events may include a call received event, a message received event and a touch input received event. The alarm 153 may output a signal announcing the event occurrence by way of vibration as well as video or audio signal. The video or audio signal may be outputted via the display 151 or the audio output unit 152. The display 151 or the audio output module 152 may be regarded as a part of the alarm 153.

The haptic module 154 may generate various tactile effects that may be sensed by a user. Vibration is a representative one of the tactile effects generated by the haptic module 154. Strength and pattern of the vibration generated by the haptic module 154 are controllable. For example, different vibrations may be outputted in a manner of being synthesized together or may be outputted in sequence.

The haptic module 154 may generate various tactile effects as well as vibration. For example, the haptic module 154 may generate the effect attributed to the arrangement of pins vertically moving against a contact skin surface, the effect attributed to the injection/suction power of air though an injection/suction hole, the effect attributed to the skim over a skin surface, the effect attributed to the contact with electrode, the effect attributed to the electrostatic force, the effect attributed to representation of hold/cold sense using an endothermic or exothermic device and/or the like.

The haptic module 154 may be implemented to enable a user to sense the tactile effect through a muscle sense of finger, arm and/or the like as well as to transfer the tactile effect through a direct contact. At least two haptic modules 154 may be provided to the mobile terminal 100 in accordance with the corresponding configuration of the mobile terminal 100.

The projector module 155 may perform an image projector function using the mobile terminal 100. The projector module 155 may display an image, which is identical to or partially different from the image displayed on the display 151, on an external screen or wall based on a control signal of the controller 180.

The projector module 155 may include a light source (not shown) generating light (e.g., laser) for projecting an image externally, an image producing means (not shown) for producing an image to output externally using the light generated from the light source, and a lens (not shown in the drawing) for enlarging to output the image externally in a predetermined focus distance. The projector module 155 may further include a device (not shown) for adjusting an image projected direction by mechanically moving the lens or the whole module.

The projector module 155 may be classified as a CRT (cathode ray tube) module, an LCD (liquid crystal display) module, a DLP (digital light processing) module and/or the like according to a device type of a display means. In particular, the DLP module may be operated by the mechanism of enabling the light generated from the light source to reflect on a DMD (digital micro-mirror device) chip and may be advantageous for downsizing of the projector module 155.

The projector module 155 may be provided in a length direction of a lateral, front and/or backside direction of the mobile terminal 100. The projector module 155 may be provided to any portion of the mobile terminal 100 according to the necessity thereof.

The memory 160 may store various types of data to support processing, control, and storage requirements of the mobile terminal 100. Examples of such data includes program instructions for applications operating on the mobile terminal 100, contact data, phonebook data, messages, audio, still pictures, moving pictures, etc. A recent use history or a cumulative use frequency of each data (e.g., use frequency for each phonebook, each message or each multimedia) may be stored in the memory 160. Moreover, data for various patterns of vibration and/or sound outputted in case of a touch input to the touchscreen may be stored in the memory 160.

The memory 160 may be implemented using any type or combination of suitable volatile and non-volatile memory or storage devices including hard disk, random access memory (RAM), static random access memory (SRAM), electrically erasable programmable read-only memory (EEPROM), erasable programmable read-only memory (EPROM), programmable read-only memory (PROM), read-only memory (ROM), magnetic memory, flash memory, magnetic or optical disk, multimedia card micro type memory, card-type memory (e.g., SD memory, XD memory, etc.), and/or other similar memory or data storage device. The mobile terminal 100 may operate in association with a web storage for performing a storage function of the memory 160 on Internet.

The interface unit 170 may couple the mobile terminal 100 with external devices. The interface unit 170 may receive data from the external devices or may be supplied with the power and then transfer the data or power to the respective elements of the mobile terminal 100 or enable data within the mobile terminal 100 to be transferred to the external devices. The interface unit 170 may be configured using a wired/wireless headset port, an external charger port, a wired/wireless data port, a memory card port, a port for coupling to a device having an identity module, audio input/output ports, video input/output ports, an earphone port and/or the like.

The identity module may be a chip for storing various kinds of information for authenticating a use authority of the mobile terminal 100 and can include a User Identify Module (UIM), a Subscriber Identify Module (SIM), a Universal Subscriber Identity Module (USIM) and/or the like. A device having the identity module (hereafter called an identity device) may be manufactured as a smart card. Therefore, the identity device may be connectible to the mobile terminal 100 via the corresponding port.

When the mobile terminal 100 is connected to an external cradle, the interface unit 170 may become a passage for supplying the mobile terminal 100 with power from the cradle or a passage for delivering various command signals inputted from the cradle by a user to the mobile terminal 100. Each of the various command signals inputted from the cradle or the power may operate as a signal enabling the mobile terminal 100 to recognize that it is correctly loaded in the cradle.

The controller 180 may control overall operations of the mobile terminal 100. For example, the controller 180 may perform control and processing associated with voice calls, data communications, video calls, etc. The controller 180 may include a multimedia module 181 that provides multimedia playback. The multimedia module 181 may be configured as part of the controller 180, or may be implemented as a separate component.

The controller 180 may perform a pattern recognizing process for recognizing a writing input and a picture drawing input carried out on the touchscreen as characters or images, respectively.

The power supply 190 may provide power required by various components for the mobile terminal 100. The power may be internal power, external power, and/or combinations thereof.

Various embodiments described herein may be implemented in a computer-readable medium using, for example, computer software, hardware, or some combination thereof. For a hardware implementation, embodiments described herein may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform functions described herein, or a selective combination thereof. Such embodiments may also be implemented by the controller 180.

For a software implementation, embodiments described herein may be implemented with separate software modules, such as procedures and functions, each of which may perform one or more of the functions and operations described herein. The software codes may be implemented with a software application written in any suitable programming language and may be stored in memory such as the memory 160, and executed by a controller or processor, such as the controller 180.

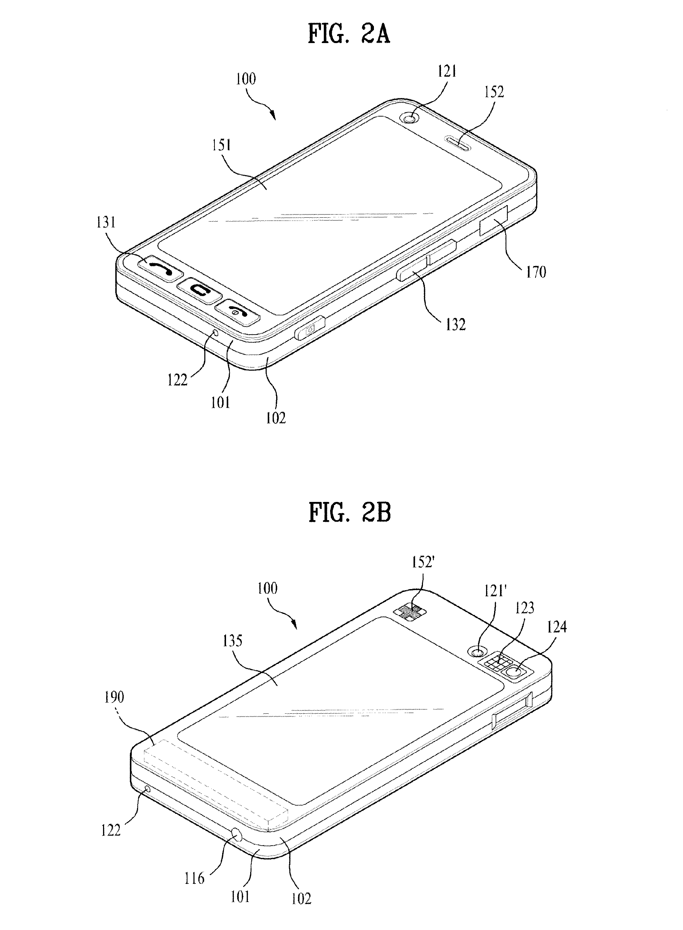

FIG. 2A is a front perspective diagram of a mobile terminal according to one embodiment.

The mobile terminal 100 may be a bar type terminal body. The mobile terminal 100 may be implemented in a variety of different configurations. Examples of such configurations include folder-type, slide-type, rotational-type, swing-type and/or combinations thereof. For clarity, further disclosure may primarily relate to a bar-type mobile terminal 100. However such teachings may apply equally to other types of mobile terminals.

As shown in FIG. 2A, the mobile terminal 100 may include a case (casing, housing, cover, etc.) configuring an exterior thereof. The case may be divided into a front case 101 and a rear case 102. Various electric/electronic parts may be loaded in a space provided between the front case 101 and the rear case 102. At least one middle case may be further provided between the front case 101 and the rear case 102.

The cases 101 and 102 may be formed by injection molding of synthetic resin or may be formed of metal substance such as stainless steel (STS), titanium (Ti) and/or the like, for example.

The display 151, the audio output unit 152, the camera 121, user input units 130/131 and 132, the microphone 122, the interface 170 and/or the like may be provided to the terminal body, and more particularly to the front case 101.

The display 151 may occupy most of a main face of the front case 101. The audio output unit 151 and the camera 121 may be provided to an area adjacent to one of both end portions of the display 151, while the user input unit 131 and the microphone 122 are provided to another area adjacent to the other end portion of the display 151. The user input unit 132 and the interface 170 may be provided to lateral sides of the front and rear cases 101 and 102.

The input unit 130 may be manipulated to receive a command for controlling an operation of the mobile terminal 100. The input unit 130 may include a plurality of manipulating units 131 and 132. The manipulating units 131 and 132 may be called a manipulating portion and may adopt any mechanism of a tactile manner that enables a user to perform a manipulation action by experiencing a tactile feeling.

Content inputted by the first or second manipulating unit 131 or 132 may be diversely set. For example, a command such as start, end, scroll and/or the like may be inputted to the first manipulating unit 131. A command for a volume adjustment of sound outputted from the audio output unit 152, a command for a switching to a touch recognizing mode of the display 151 and/or the like may be inputted to the second manipulating unit 132.

FIG. 2B is a perspective diagram of a backside of the terminal shown in FIG. 2A.

As shown in FIG. 2B, a camera 121' may be additionally provided to a backside of the terminal body, and more particularly to the rear case 102. The camera 121 may have a photographing direction that is substantially opposite to that of the former camera 121 and may have pixels differing from those of the camera 121.

The camera 121 may have low pixels enough to capture and transmit a picture of user's face for a video call, while the camera 121' may have high pixels for capturing a general subject for photography without transmitting the captured subject. Each of the cameras 121 and 121' may be installed at the terminal body to be rotated or popped up.

A flash 123 and a mirror 124 may be additionally provided adjacent to the camera 121'. The flash 123 may project light toward a subject in case of photographing the subject using the camera 121'. In case that a user attempts to take a picture of the user (self-photography) using the camera 121', the mirror 124 may enable the user to view a user's face reflected by the mirror 124.

An additional audio output unit 152' may be provided to the backside of the terminal body. The additional audio output unit 152' may implement a stereo function together with the former audio output unit 152 shown in FIG. 2A and may be used for implementation of a speakerphone mode in talking over the terminal.

A broadcast signal receiving antenna 124 may be additionally provided to the lateral side of the terminal body as well as an antenna for communication or the like. The antenna 124 constructing a portion of the broadcast receiving module 111 (FIG. 1) may be retractably provided to the terminal body.

The power supply 190 for supplying a power to the mobile terminal 100 is provided to the terminal body. The power supply 190 may be configured to be built within the terminal body. Alternatively, the power supply 190 may be configured to be detachably connected to the terminal body.

A touchpad 135 for detecting a touch may be additionally provided to the rear case 102. The touchpad 135 may be configured in a light transmittive type like the display 151. If the display 151 is configured to output visual information from its both faces, it may recognize the visual information via the touchpad 135 as well. The information outputted from both of the faces may be entirely controlled by the touchpad 135. Alternatively, a display may be further provided to the touchpad 135 so that a touchscreen may be provided to the rear case 102 as well.

The touchpad 135 may be activated by interconnecting with the display 151 of the front case 101. The touchpad 135 may be provided in rear of the display 151 in parallel. The touchpad 135 can have a size equal to or smaller than the display 151.

A message as discussed hereinafter may include a text message (by short message service (SMS) or long message service (LMS)) or a multimedia message (by multimedia message service (MMS)). Embodiments explained in the following description may be applicable to reception data of any type (e.g., message, email, etc.) requiring a user check.

A message list may include a transmitted message list including messages (hereafter called transmitted messages) transmitted to a counterpart terminal from a user terminal, a received message list including messages (hereafter called received messages) received by a user terminal from a counterpart terminal or a threaded message list including transceived (transmitted/received) messages.

A message list may include a message item corresponding to each counterpart terminal or a message item corresponding to at least one message transceived with counterparts.

In the former case, a component of the message list may include a counterpart terminal. In the latter case, a component of the message list may include a message transceived with a counterpart terminal.

For example, if a plurality of messages are received from a first counterpart terminal, one message item corresponding to a plurality of first counterpart terminals may be generated in the former case. If a plurality of messages are received from a first counterpart terminal, a plurality of message items corresponding to the number of messages received from the first counterpart terminal may be generated in the latter case.

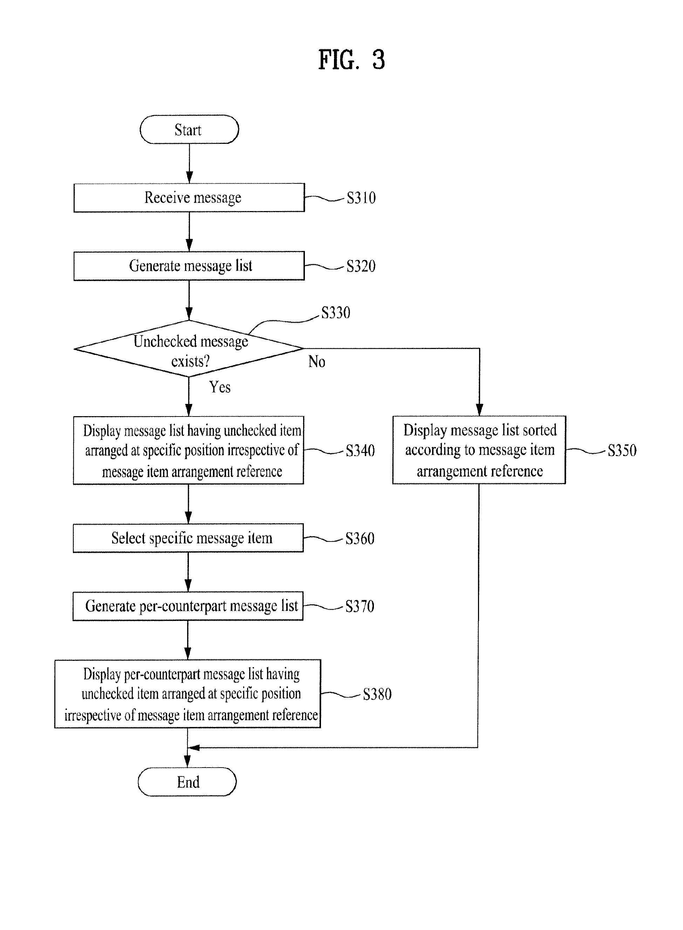

A method of displaying a message list in a case of a presence of an unchecked message from among received messages may be described with reference to FIGs. 3 to 10B.

FIG. 3 is a flowchart of a method of displaying a message list in a mobile terminal according to one embodiment of the present invention.

As shown in FIG. 3, the mobile terminal 100 may receive, in operation S310, at least one message from at least one counterpart terminal via the wireless communication unit 110.

The at least one counterpart terminal may include a terminal of which information (e.g., phonebook, name, email address, etc.) is registered with a phonebook of the mobile terminal 100. Alternatively, the at least one counterpart terminal may include a terminal of which information is not registered at all with a phonebook of the mobile terminal.

For example, in the receiving operation S310, the mobile terminal 100 may receive a message provided via a mobile communication network using the mobile communication module 112 and the mobile terminal 100 may also receive a message provided via a wireless internet using the wireless internet module 113.

The mobile terminal 100 may send at least one message to each counterpart terminal via the wireless communication unit 110.

The mobile terminal 100 may input message content and reception counterpart information in a message write mode and then send the written message to the counterpart terminal corresponding to the inputted reception counterpart information.

The mobile terminal 100 may generate, in operation S320, a message list that includes a message item corresponding to the counterpart terminal having sent the message that was received in the receiving operation S310.

If a plurality of messages that were transmitted by different counterpart terminal are received in the receiving operation S310, a number of message items included in the message list may be as many as a number of the counterpart terminals having sent the messages. Meanwhile, if a plurality of the messages that were sent by one counterpart terminal are received in the receiving operation S310, one message item may be included in the message list.

The message item may include a reception hour of a latest message received from a corresponding counterpart terminal, content of a latest message received from the corresponding counterpart terminal, and information on the corresponding counterpart terminal. Therefore, even if a plurality of messages are received from a corresponding counterpart terminal, information on a latest received message may be included in a message item.

While a message item is displayed, if a new message is received from a corresponding counterpart terminal, the message item may be rearranged according to a reception hour order (if an arrangement reference of the message item is a reception hour) and content included in the message item may change with reference to the newly received message.

The arrangement reference of the message items on the generated message list may include a reception hour of a latest message received from a counterpart terminal or information on the corresponding counterpart terminal.

For example, if message items are arranged or sorted in order of an early or late reception hour of a latest received message or in alphabetic order of a name of a corresponding counterpart terminal.

In generating a message item for each of the received messages, the message item corresponding to each received message may be included in the generated message list.

For example, if a plurality of messages are received from one counterpart terminal, a number of generated messages items may be as many as a number of a plurality of the received messages. In this example, a reception hour of a message, content of the message, information on a counterpart terminal having sent the message and/or the like may be included in the message item.

After a group including a plurality of counterpart terminals has been designated, when a message is received from a specific terminal belonging to the designated group, a message item corresponding to the designated group may be generated.

For example, if a message is received from each of a plurality of the counterpart terminals, a message item may be generated in a manner of corresponding to the designated group, rather than to each of the plurality of the counterpart terminals. Information (e.g., group name) on the corresponding group may be included in the message item rather than information on the corresponding counterpart terminal. The group designation may be performed prior to message reception or during message list generation or message list display.

The mobile terminal 100 may determine, in operation S330, whether an unchecked message exists in the messages received in the receiving operation S310 under control of the controller 180.

An unchecked message may be a message that has not been checked or reviewed by a user despite being received by the mobile terminal 100.

In determining whether the unchecked message exists in the determining operation S330, the mobile terminal 100 may display, in operation S340, the generated message list and also display a message item (hereafter called an unchecked item) corresponding to the counterpart terminal having sent the unchecked message. The message item may be displayed at a specific position on the message list regardless of the arrangement reference of the message item. The message list may be displayed on the display 151.

At least one of a reception hour of the unchecked message received from the counterpart terminal, content of the unchecked message received from the counterpart terminal, a number of the unchecked messages received from the counterpart terminal, and/or information on the corresponding counterpart terminal may be included in the unchecked item.

A reception hour and message content of the latest message received from the corresponding counterpart terminal may be included in the unchecked item. Information indicating existence of the unchecked message (i.e., uncheck indication information) may be included. For example, the uncheck indication information may be represented as at least one of an icon, a text and an image and/or may include a number of the unchecked messages received from the corresponding counterpart terminal.

Assuming an example that a message list includes a plurality of rows, the specific position may include a top row or a bottom row. If there are a plurality of unchecked messages, the specific position may include a predetermined number of rows from the top or from the bottom. The specific position may be non-limited by the top or bottom row, but may include all positions specified to display the unchecked item.

For example, if the arrangement reference of message items is an order of the late (or early) reception hour of the latest message received from the corresponding counterpart terminal, even if a message(s) received behind (or ahead of) the reception hour of the unchecked message exists, the mobile terminal 100 may display the unchecked item at a first row positioned ahead of the message item corresponding to the counterpart terminal having sent the message received behind (or ahead of) the reception hour of the unchecked message.

As another example, if the arrangement reference of message items is an alphabetic order of the name of the corresponding counterpart terminal, even if the name of the counterpart terminal having sent the unchecked message starts with 'D' and the name of the counterpart terminal having sent an already-checked message starts with 'A', the mobile terminal 100 may display the unchecked item in the first row ahead of the message item corresponding to the counterpart terminal having the name starting with 'A'.

When a message list is displayed by being divided into a plurality of pages (i.e., a message item displayed on a next page may be reviewed or checked by flipping pages), the unchecked item may keep being displayed at the specific position despite that the pages are turned over.

For example, while an unchecked item is displayed on a first row of a first page, if the first page is turned over to a second page, the unchecked item can remain being displayed on the first row despite that a message list part corresponding to the second page is displayed.

In determining that the unchecked message does not exist in the determining operation S330, the mobile terminal 100 may display, in operation S350, a message list that includes at least one message item arranged according to the message item arrangement reference via the display 151 under control of the controller 180.

The displaying operation S340 may be explained in detail with reference to the accompanying drawings.

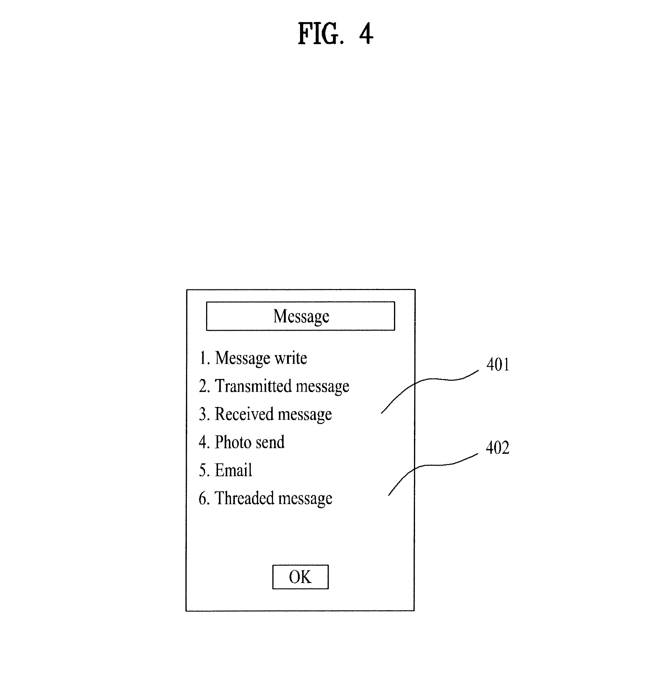

FIG. 4 is a screen configuration for selecting a menu item corresponding to a message list view.

Referring to FIG. 4, in entering a message related mode, the mobile terminal 100 may display a menu list including message related menu lists.

If the menu item 'received message' 401 is selected from the menu list, the mobile terminal 100 may display a received message list including message item(s) corresponding to counterpart terminal(s) having sent received message(s). If the menu item 'threaded message' 402 is selected from the menu list, the mobile terminal 100 may display a transceived message list including a message item corresponding to a counterpart terminal having received a transmitted message or a message item corresponding to a counterpart terminal having transmitted a received message.

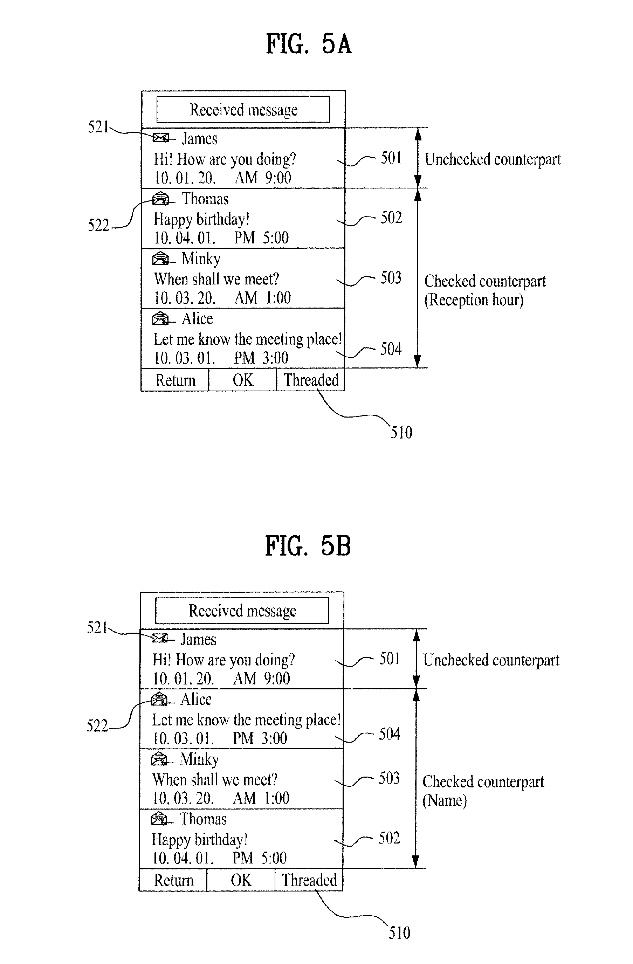

FIGs. 5A to 5D are screen configurations for displaying an unchecked item at a specific position on a received message list.

For ease of discussion, the menu item 'received message' 401 is selected in FIG. 4, and four message items are included in the received message list.

Referring to FIGs. 5A to 5D, for example of identity information of a message item, it is able to indicate that a corresponding message item relates to an unchecked received message using an unchecked received message icon 521. Additionally, it is able to indicate that a corresponding message item relates to a checked received message using a checked received message icon 522.

In FIG. 5A and FIG. 5B, a message item corresponding to a counterpart terminal having sent an unchecked message is called an unchecked item and a message item corresponding to a counterpart terminal having sent a checked message is called a checked item.

Referring to FIG. 5A and FIG. 5B, an unchecked item 501 may be displayed on a first row of a received message list regardless of an arrangement reference of message items and the remaining three checked items 502 to 504 may be displayed on second to fourth rows of the received message list, respectively.

For example, since an arrangement reference of message items follows an order of an early reception hour of a latest received message in FIG. 5A, a first checked item (reception hour: PM 09:00, April 1, 2010) 502, a second checked item (reception hour: AM 10:00, March 20, 2010) 503 and a third checked item (reception hour: PM 03:00, March 1, 2010) 504 may be displayed in order from the top.

As another example, since an arrangement reference of message items follows an alphabetic order of information (e.g., name) of a corresponding counterpart terminal in FIG. 5B, a third checked item (name: Alice) 504, a second checked item (name: Minky) 503 and a first checked item (name: Thomas) 502 may be displayed in order from the top.

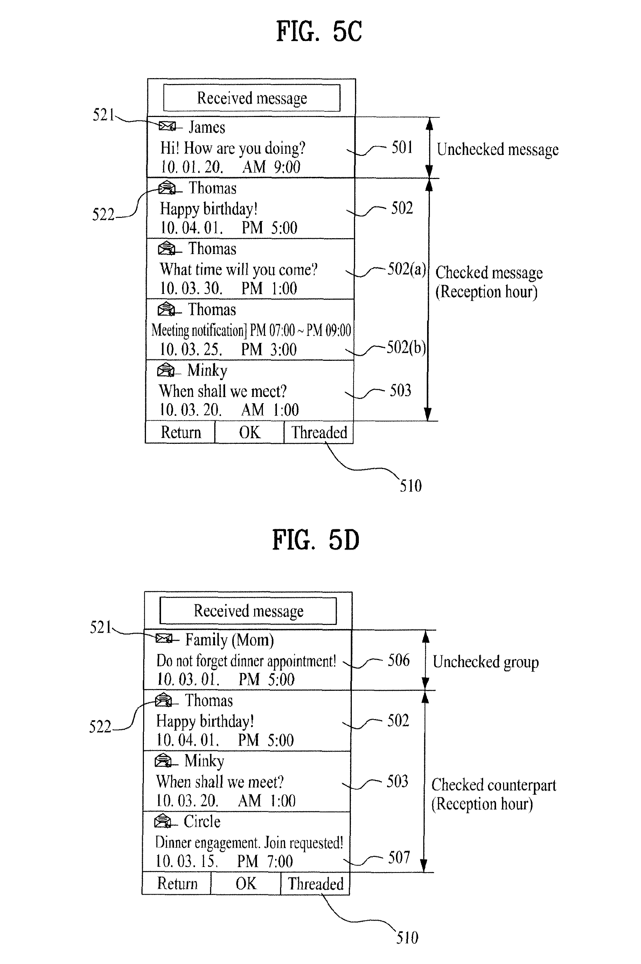

In FIG. 5C, a message item corresponding to an unchecked message may be called an unchecked item and a message item corresponding to a checked message may be called a checked item. In particular, FIG. 5C shows that a message item is generated for received message.

Referring to FIG. 5C, an unchecked item 501 is displayed on a first row of a received message list regardless of an arrangement reference of message items and the remaining four checked items 502, 502(a), 502(b) and 503 may be displayed on second to fifth rows of the received message list, respectively. In this example, the arrangement reference of message items follows an order of an early reception hour of the message.

For example, if messages received from a counterpart terminal 'Thomas' exist, the message items 502, 502(a) and 502(b) respectively corresponding to the three messages may be sequentially displayed with reference to reception hours.

FIG. 5D shows an example that a message received from a random counterpart terminal belonging to a group including a plurality of counterpart terminals exists. In this example, even if the message is received from the random counterpart terminal, a message item corresponding to the group of the random counterpart terminal may be generated, rather than the random counterpart terminal.

Referring to FIG. 5D, if an unchecked message received from a specific counterpart terminal (name: mom) belonging to a group 'family' exists, an unchecked item 506 corresponding (not to the specific counterpart terminal) to the group 'family', to which the specific counterpart terminal belongs, may be displayed on a first row of the received message list.

If a checked message received from a specific counterpart terminal belonging to a group 'circle' exists, a checked item 507 corresponding to the group 'circle' may be displayed on the received message list according to the arrangement reference of message items.

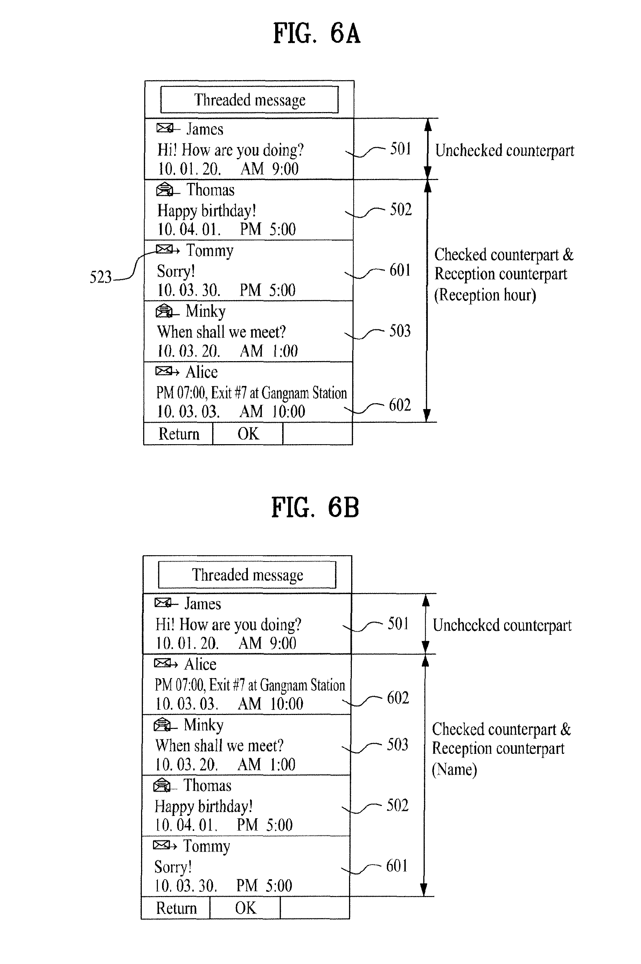

FIGs. 6A to 6C are screen configurations for displaying an unchecked item at a specific position on a transceived message list.

For ease of discussion, it is assumed that a menu item 'threaded message' 402 is selected, and five message items are included in a transceived message list.

Referring to FIGs. 6A to 6D, for example of identity information of a message item, it may indicate that a corresponding message item relates to a transmitted message using a transmitted message icon 523.

Referring to FIG. 6A and FIG. 6B, an unchecked item 501 may be displayed on a first row of a transceived message list regardless of an arrangement reference of message items. The remaining two checked items 502 and 503 and the remaining two transmitted message items 601 and 602 may be displayed on second to fifth rows.

If a message is transmitted to a counterpart terminal from the mobile terminal 100, the transmitted message item may mean the item corresponding to the counterpart terminal having received the transmitted message.

For example, since an arrangement reference of message items follows an order of an early transceiving hour of a latest transceived message in FIG. 6A, a first checked item (reception hour: PM 09:00, April 1, 2010) 502, a first transmitted message item (transmission hour: PM 05:00, March 30, 2010) 601, a second checked item (reception hour: AM 10:00, March 20, 2010) 503 and a second transmitted message item (transmission hour: AM 10:00, March 3, 2010) 602 may be displayed in order from the top.

As another example, since an arrangement reference of message items follows an alphabetic order of information (e.g., name) of a corresponding counterpart terminal in FIG. 6B, a second transmitted message item (name: Alice) 602, a second checked item (name: Minky) 503, a first checked item (name: Thomas) 502 and a first transmitted message item (name: Tommy) 601 may be displayed in order from the top.

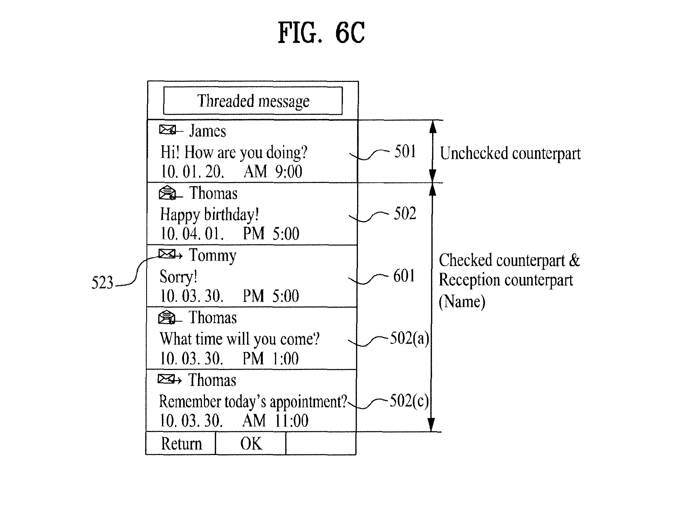

In FIG. 6C, a message item may be generated for each transceived message. An unchecked item 501 may be displayed on a first row of a transceived message list regardless of an arrangement reference of message items, the remaining three checked items 502, 502(a) and 502(c) and the rest of one transmitted message 601 may be displayed on second to fifth rows of the transceived message list, respectively. In this example, it may be observed that the arrangement reference of message items follows an order of an early transceiving hour of message.

For example, if messages transceived with a counterpart terminal 'Thomas' exist, the message items 502, 502(a) and 502(b) respectively corresponding to the three messages may be sequentially displayed with reference to transceiving hours.

If a 'threaded message' 402 is selected (not shown), it may display a received message list including only received messages (compare with FIGs. 5A to 5D).

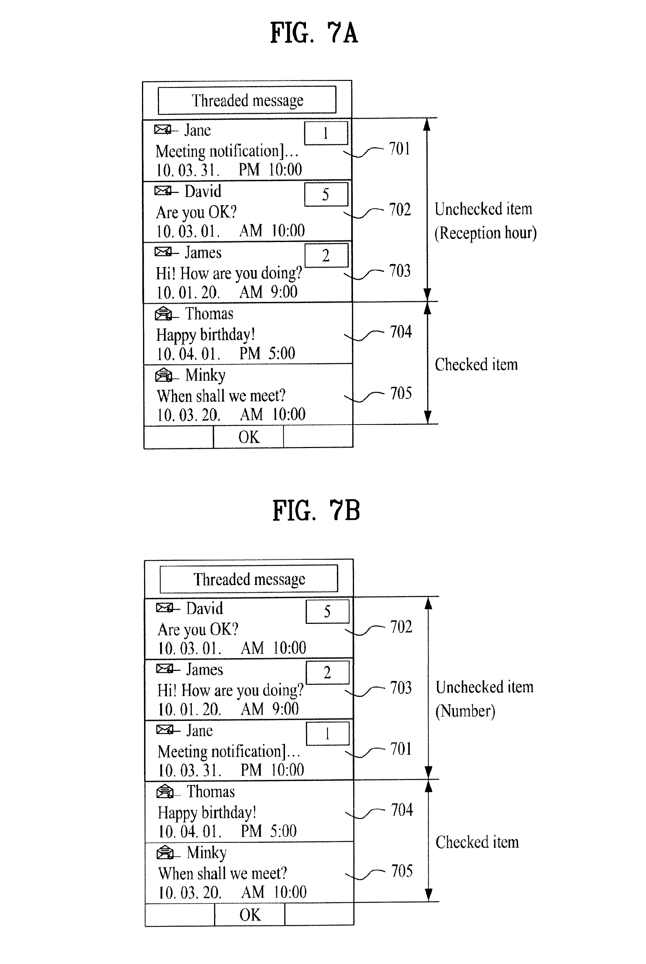

FIG. 7A and FIG. 7B are screen configurations for a method of sorting unchecked items when a plurality of counterpart terminals having unchecked messages exist therein. An example that a plurality of unchecked messages exist for one counterpart terminal is described with reference to FIG. 7A and FIG. 7B. For ease of description, FIG. 7A and FIG. 7B may be limited to a transceived message list, but are applicable to a received message list.

Referring to FIG. 7A, when a plurality of unchecked items 701 to 703 exist, the unchecked items may be displayed on first to third rows (i.e., examples of specific positions) of a transceived message list by being sorted in order of an early reception hour of an unchecked message.

For example, the first unchecked item (reception hour: PM 10:00, March 31, 2010) 701, the second unchecked item (reception hour: AM 10:00, March 1, 2010) 702 and the third unchecked item (reception hour: AM 09:00, January 20, 2010) 703 may be sequentially arranged in first to third rows, respectively.

The unchecked items 701 to 703 may be arranged in order of an early reception hour of an unchecked message.

Referring to FIG. 7B, when a plurality of unchecked items 701 to 703 exist, the unchecked items may be displayed on first to third rows (i.e., examples of specific positions) of a transceived message list in higher order of the number of unchecked messages.

For example, the second unchecked item (5 unchecked messages) 702, the third unchecked item (2 unchecked messages) 703 and the first unchecked item (1 unchecked message) 701 may be arranged in the first to third rows in order, respectively.

Referring to FIG. 7A and FIG. 7B, the number of unchecked messages received from one counterpart terminal may be displayed within a corresponding message item.

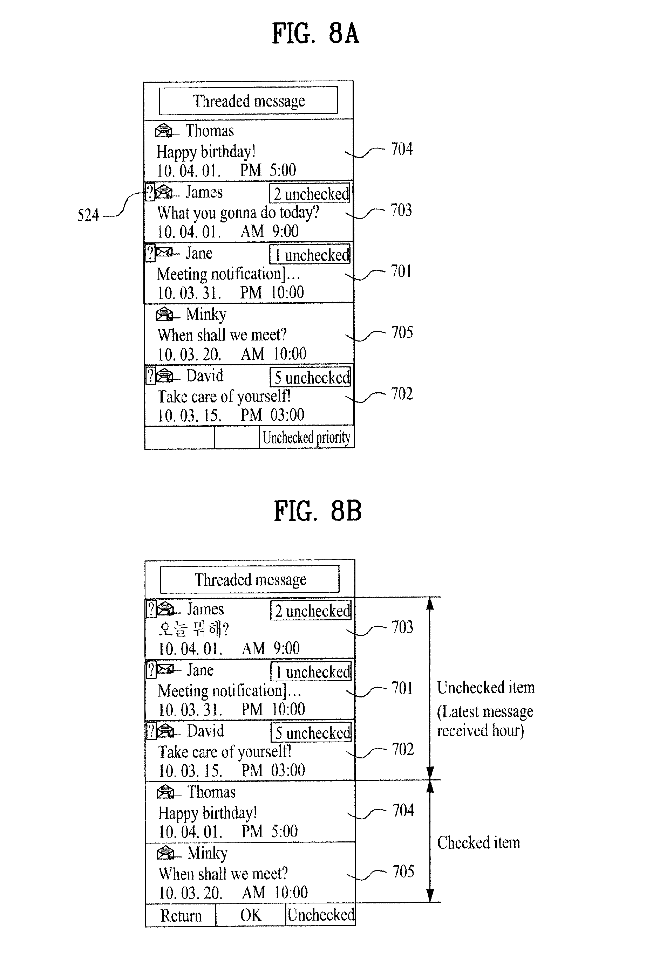

FIG. 8A and FIG. 8B are screen configurations for distinguishably displaying unchecked items on a message list. For ease of description, the following description may be limited to a transceived message list and may also be applicable to a received message list.

Referring to FIG. 8A, a plurality of message items, which are arranged in order of an early transceiving hour of a latest transceived message, may be included in a transceived message list. Unchecked items 701 to 703 may be arranged in order of a reception hour of a latest message received from a corresponding counterpart terminal.

In this example, the unchecked items 701 to 703 may be distinguishably displayed to indicate that there exists an unchecked message received from the corresponding counterpart terminal. For example, the unchecked item may be thickly displayed. The unchecked item may also be displayed by being highlighted. The unchecked item may also be displayed with a separate color. Moreover, an icon 524 may be displayed within the corresponding unchecked item to indicate an unchecked region.

Content relevant to the latest message received from the corresponding counterpart terminal may be displayed in each of the unchecked items 701 to 703. The number or reception hours of unchecked messages received from the corresponding counterpart terminal may be displayed in each of the unchecked items 701 to 703.

Referring to FIG. 8B, the unchecked items 701 to 703 may be displayed in first to third rows (i.e., examples of specific positions) on the transceived message list. The unchecked items 701 to 703 may be arranged in order (i.e., 703 → 701 → 702) of an early reception hour of the latest message received from the corresponding counterpart terminal.

Referring now to FIG. 3, the mobile terminal 100 may receive a selection of a specific message item from the displayed message list (in the displaying operation S340) via the user input unit 130 in operation S360.

Under control of the controller 180, the mobile terminal 100 may generate, in operation S370, a per-counterpart message list including at least one message transceived with a specific counterpart terminal corresponding to the specific message item selected in the selecting operation S360.

For example, if there are 5 messages transceived with the specific counterpart terminal, 2 received and checked messages and 3 received and unchecked messages, a total of 10 messages may be included in the per-counterpart message list.

For example of the message arrangement reference, at least one of the messages included in the generated per-counterpart message list may be sorted with reference to the transceiving hour of the message. For example, the at least one message may be sorted in order of an early or late transceiving hour.

Under control of the controller 180, the mobile terminal 100 may display, in operation S380, the per-counterpart message list that is generated in the generating operation S370 and also display an unchecked message received from the specific counterpart terminal corresponding to the selected specific message item at a specific position in the per-counterpart message list regardless of the message arrangement reference. The per-counterpart message list may be displayed via the display 151.

In this example, assuming a case that the per-counterpart message list is configured with a plurality of rows, the specific position can include a top row or a bottom row. Moreover, in an example that a plurality of unchecked messages exist, the specific position can include a predetermined number of rows from the top or the bottom. The specific position may be non-limited by the top or bottom row, but may include every position designated to display the unchecked item.

For example, in an example that the message arrangement reference is the order of the late reception hour (or the early reception hour), even if a message(s) received after (or before) the reception hour of the unchecked message exists, the mobile terminal 100 may display the unchecked message in the first row ahead of the position of the message received after the unchecked message.

In an example that the per-counterpart message list is displayed by being divided into a plurality of pages (i.e., able to check a message item displayed on a next page via the paging flipping), the unchecked message may keep being displayed at a specific position despite that the page is turned over.

For example, while an unchecked message is displayed on a first row of a first page, if the first page is turned over to a second page, the unchecked message may keep being displayed on the first page despite that a message list part corresponding to the second page is displayed.

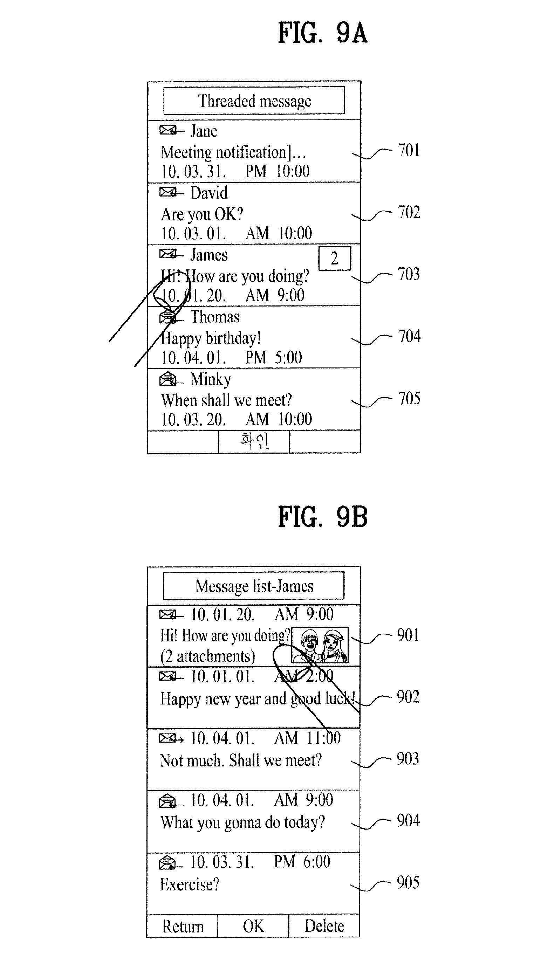

The displaying operation S380 may be explained with reference to FIGs. 9A to 9E. For ease of description, it is assumed that a message list includes a message item per counterpart terminal.

Referring to FIG. 9A, the mobile terminal 100 may receive a selection of a third message item 703 having at least one unchecked message exist therein from among a plurality of message items 701 to 703 included in a message list.

Referring to FIG. 9B, the mobile terminal 100 may display a per-counterpart message list that includes at least one or more messages 901 to 905 transceived with a counterpart terminal 'James' corresponding to the selected third message item 703.

For example, the per-counterpart message list may include message enumerated with reference to a transceiving hour (particularly, order of a latest transceiving hour, order of an early transceiving hour, etc.).

The unchecked messages 901 and 902 from among the messages received from 'James' may be displayed at specific positions on the per-counterpart message list regardless of the message arrangement reference (transceiving hour reference). For example, assuming that the per-counterpart message list includes a plurality of rows, if there is one unchecked message, it may be displayed on the first row. If a plurality of unchecked messages exist, they may be sequentially displayed from the first row. The specific position may include a part on the list or a position specified by a user.

The multimedia message (such as the unchecked message 901) from among the messages received from 'James' can display file information (e.g., the number of files, file names, file contents, etc.) of files attached to the multimedia message within its display region on the per-counterpart message list.

For example, if the file attached to the multimedia message is a photo file, an image corresponding to the photo file may be displayed as the file information. If a plurality of photo files exist, an image corresponding to a representative photo file or an image corresponding to each of a plurality of the photo files may be displayed.

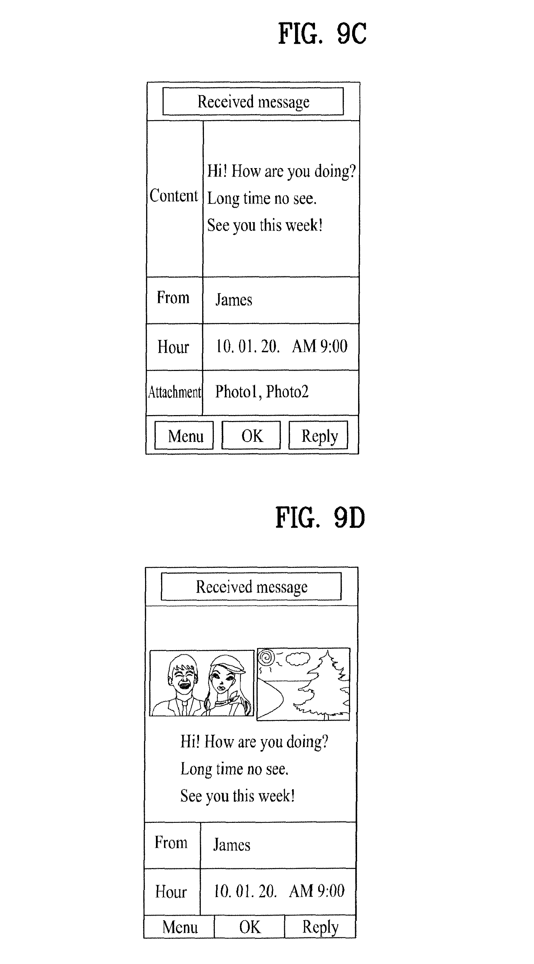

Referring to FIG. 9C or FIG. 9D, in an example that the first unchecked message 901 is selected from the per-counterpart message list shown in FIG. 9B by a user, the mobile terminal 100 may display a message content corresponding to the first unchecked message 901 and relevant information (e.g., reception hour, transmission counterpart terminal information_name or phone number, attachment file, etc.).

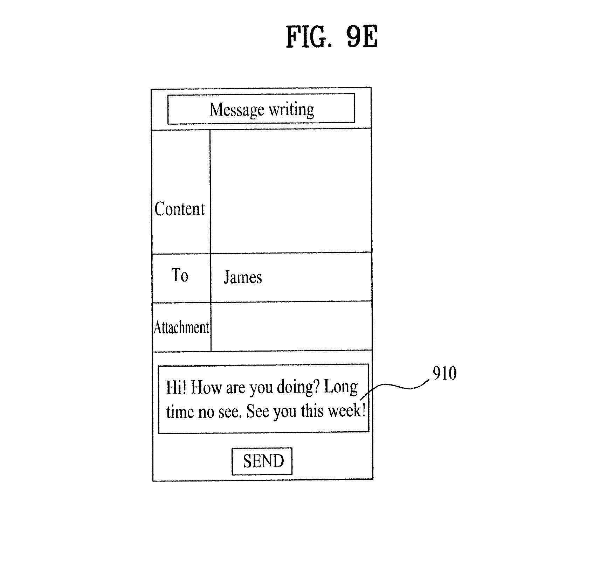

Referring to FIG. 9E, in an example that the first unchecked message 901 is selected from the per-counterpart message list shown in FIG. 9B by a user, the mobile terminal 100 may enter a response message write mode in response to a counterpart terminal having transmitted the first unchecked message 901. A response message write window may be displayed on one prescribed region of the screen and message content of the first unchecked message 901 may be displayed on the other region of the screen.

The mobile terminal 100 may distinguish whether an action inputted by a user is a check command action for checking the unchecked message (i.e., the screen configuration shown in FIG. 9C or FIG. 9D) or a response message write command action for responding to the unchecked message (i.e., the screen configuration shown in FIG. 9E).

Referring to FIGs. 9C to 9E, since the unchecked message 901 is checked or reviewed by the user, it may not be the unchecked message anymore. Therefore, the corresponding message may be arranged at the position according to the message arrangement reference rather than the specific position (e.g., the first row) on the per-counterpart message list.

Under control of the controller 180, if a predetermined time passes after a reception hour of an unchecked message or a capacity of the memory 160 for storing unchecked messages is equal to or smaller than a predetermined reference, the mobile terminal 100 may output reception indication information on the reception of the unchecked message via the output unit 150.

This may enable a user to quickly check for unchecked message that have not been reviewed for considerable time and also enable an unchecked message to be checked and deleted in a situation that a new message is not receivable due to limited memory capacity.

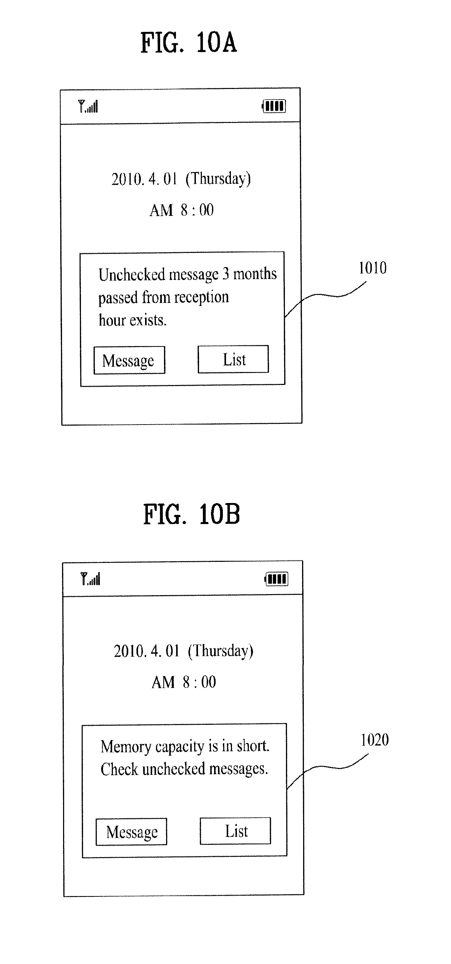

This may be explained in detail with reference to FIG. 10A and FIG. 10B.

FIG. 10A and FIG. 10B are screen configurations for outputting information for indicating a reception of an unchecked message.

Referring to FIG. 10A, if a predetermined time (e.g., 3 months) passes since a reception hour of an unchecked message, the mobile terminal 100 may display a text indicating that the unchecked message exists using a popup window 1010. The predetermined time may be set to one of 1 hour, a day, a week, a month, three months and/or the like, or may be freely set by a user.

Referring to FIG. 10B, in an example that a memory capacity is equal to or smaller than a predetermined reference, the mobile terminal 100 may display a text indicating that the unchecked message exists using a popup window 1020.

If 'message' is selected in FIG. 10A or FIG. 10B, the mobile terminal 100 may display a message content of the corresponding unchecked message. If 'list' is selected in FIG. 10A or FIG. 10B, the mobile terminal 100 may display a message list having the corresponding unchecked message located at a specific position.

The reception indication information of the unchecked message may be outputted using at least one of voice, image, icon, alarm sound, alarm vibration, alarm lamp and/or the like as well as text.

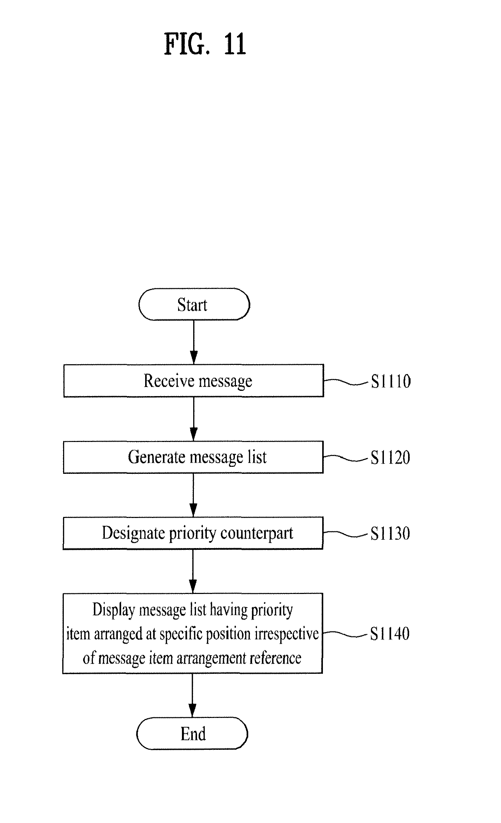

A method of displaying a message list according to designation of a priority counterpart terminal may be explained with reference to FIGs. 11 to 14C.

FIG. 11 is a second flowchart for a method of displaying a message list in a mobile terminal according to one embodiment of the present invention.

The mobile terminal 100 may receive, in operation S1110, at least one message from at least one counterpart terminal via the wireless communication unit 110. The receiving operation S1110 may be identical to or similar to the former receiving operation S310 shown in FIG. 3, and further details may be omitted.

Under control of the controller 180, the mobile terminal 100 may generate, in operation S1120, a message list including a message item corresponding to the counterpart terminal having transmitted the message received in the receiving operation S1110. The generating operation S1120 may be identical to or similar to the former generating operation S320 shown in FIG. 3, and further details may be omitted.

The mobile terminal 100 may designate, in operation S1130, a priority counterpart terminal according to a user selection action via the user input unit 130.

The priority counterpart terminal may include a terminal, which enables message items to be displayed at specific positions on the message list regardless of an arrangement reference of the message items, from among a plurality of terminals having transmitted messages to the mobile terminal 100.

The priority counterpart terminal may include each of the at least one or more counterpart terminals or may become a group including a plurality of counterpart terminals.

The designating operation S1130 may be performed before the receiving operation S1110. Alternatively, the designating operation S1130 may be performed while the message is being displayed.

For example, in case that the designating operation S1130 is performed before the receiving operation S1110, a priority counterpart terminal may be designated using a menu corresponding to designation of the priority counterpart terminal. In case that the designating operation S1130 is performed while the message list is displayed, it may designate a priority counterpart terminal from among counterpart terminals having sent messages. Of course, while the message list is displayed, it may designate a priority counterpart terminal using a menu corresponding to the designation of the priority counterpart terminal.

Information of the designated priority counterpart terminal may be stored in the memory 160. For example, information on the priority counterpart terminal may include a name of the priority counterpart terminal, a phone number of the priority counterpart terminal and/or the like.

A valid designation condition of a priority counterpart terminal may be set. Therefore, the designated priority counterpart terminal may work as the priority counterpart terminal only if meeting the set valid designation condition. For example, the valid designation condition may include at least one of a predetermined time interval, a specific place and/or the like.

Under control of the controller 180, the mobile terminal 100 may display, in operation S1140, the generated message list and also display a message item (hereafter called a priority item) corresponding to the priority counterpart terminal designated in the designating operation at a specific position on the message list regardless of the arrangement reference of message items. The displaying operation S1140 may be performed using the display 151.

The message list displayed in the displaying operation S1140 can include an unchecked item as well as a priority item. The former embodiments described in the foregoing description may be applicable to the unchecked item, which is a separate matter from the priority display of the priority item.

The priority item may include at least one of a reception hour of a latest message received from the priority counterpart terminal, content of the latest message received from the priority counterpart terminal and information on the priority counterpart terminal.

When an unchecked message received from the priority counterpart terminal exists (i.e., an example that a corresponding message item includes a priority item and an unchecked item), information (uncheck indication information) indicating existence of the unchecked message or a content related to the unchecked message rather than the latest received message may be included in the priority item.

Assuming an example that a message list includes a plurality of rows, the specific position may include a top row or a bottom row. If there are a plurality of priority items, the specific position can include a predetermined number of rows from the top or the bottom. The specific position may be non-limited by the top or bottom row, but may include all positions specified to display the priority items.

When a message list is displayed by being divided into a plurality of pages (i.e., a message item displayed on a next page may be checked by flipping pages), the priority item may keep being displayed at the specific position despite that the pages are turned over.

For example, while a priority item is displayed on a first row of a first page, if the first page is turned over to a second page, the priority item may keep being displayed on the first row despite that a message list part corresponding to the second page is displayed.

In an example that N priority items and M unchecked items are included in a message list, the priority items may be displayed on 1^{st} to N^{th} rows of the message list and the unchecked items may be displayed on (N+1)^{th} to (N+M)^{th} rows.

The unchecked items may be displayed by being followed by the priority items. Alternatively, the unchecked and priority items may be sequentially displayed at specific positions according to their reception hours without being discriminated from each other. If a message item corresponds to both a priority item and an unchecked item, it may be displayed by being distinguished from other priority or unchecked items.

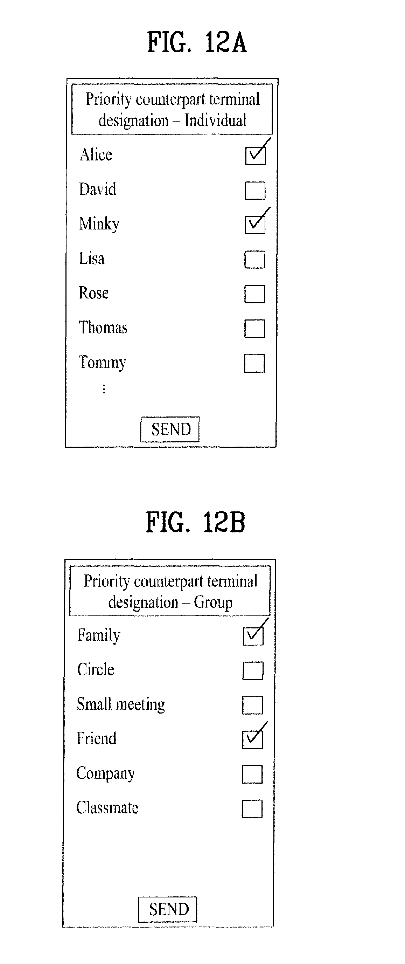

In the following description, when a priority counterpart terminal is designated before a message reception, a process for designating the priority counterpart terminal and a message list displaying process may be explained with reference to FIGs. 12A to 13C.

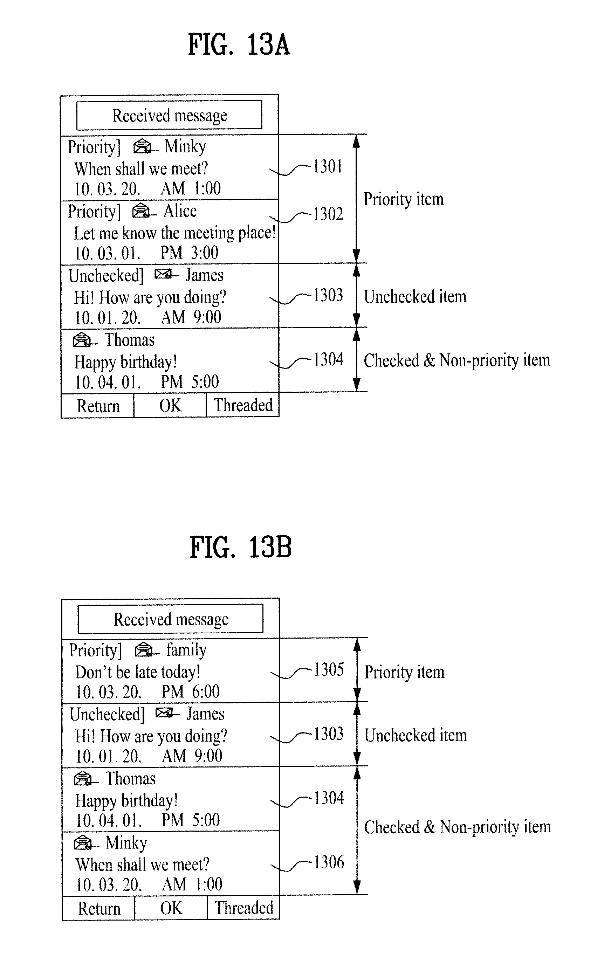

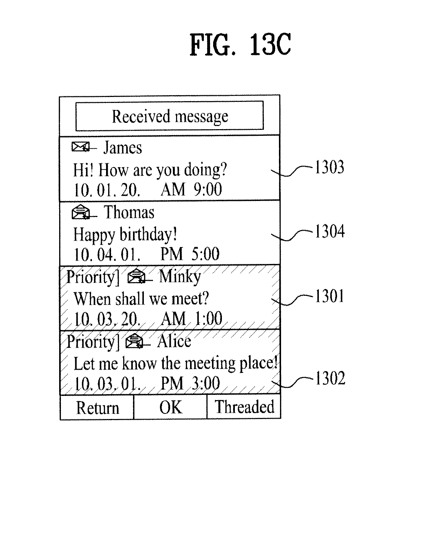

FIG. 12A and FIG. 12B are screen configurations for entering a menu for designating a priority counterpart terminal. FIGs. 13A and 13C are screen configurations for displaying a message item of a priority counter terminal previously designated via a menu search at a specific position on a menu list.

Referring to FIG. 12A, the mobile terminal 100 may enter a menu for designating a priority counterpart terminal individually according to a user's menu manipulation.

For example, the mobile terminal 100 may display a name (or phone number) of each of a plurality of counterpart terminals registered with a phonebook and may then designate the counterpart terminal selected by a user to a priority counterpart terminal.

If 'Minky' and 'Alice' are designated to priority counterpart terminals in FIG. 12A, respectively, the mobile terminal 100 may display, as shown in FIG. 13A, a message item 1301 corresponding to Minky and a message item 1302 corresponding to Alice on a first row and a second row, respectively, regardless of the arrangement reference of message items on the message list.

In so doing, according to a reception hour of a latest message received from each of Minky and Alice, the message item 1301 corresponding to Minky may be arranged by being followed by the message item 1302 corresponding to Alice.

Referring to FIG. 12B, the mobile terminal 100 may enter a menu for designating a priority counterpart terminal per group according to a user's menu manipulation.

For example, the mobile terminal 100 may display a name of each of a plurality of groups registered with a phonebook and may then designate a plurality of counterpart terminals included in the group selected by a user to priority counterpart terminals.

If the group 'family' is designated to priority counterpart terminals in FIG. 12B, the mobile terminal 100 may display, in FIG. 13B, a message item 1305 corresponding to the group 'family' in a first row regardless of the arrangement reference of message items on the message list.

In so doing, a content relevant to the latest message received from one of a plurality of the counterpart terminals belonging to the group 'family' may be included in the message item 1305 corresponding to the group 'family'.

Referring to FIG. 13C, the mobile terminal 100 may display priority items according to the arrangement reference of message items by distinguishably displaying the priority items 1201 and 1302 rather than displaying the priority items at specific positions on the message list.

For example, the distinguishable display may include one of a highlight, separate color setting and oblique lines of a display region corresponding to a priority item.

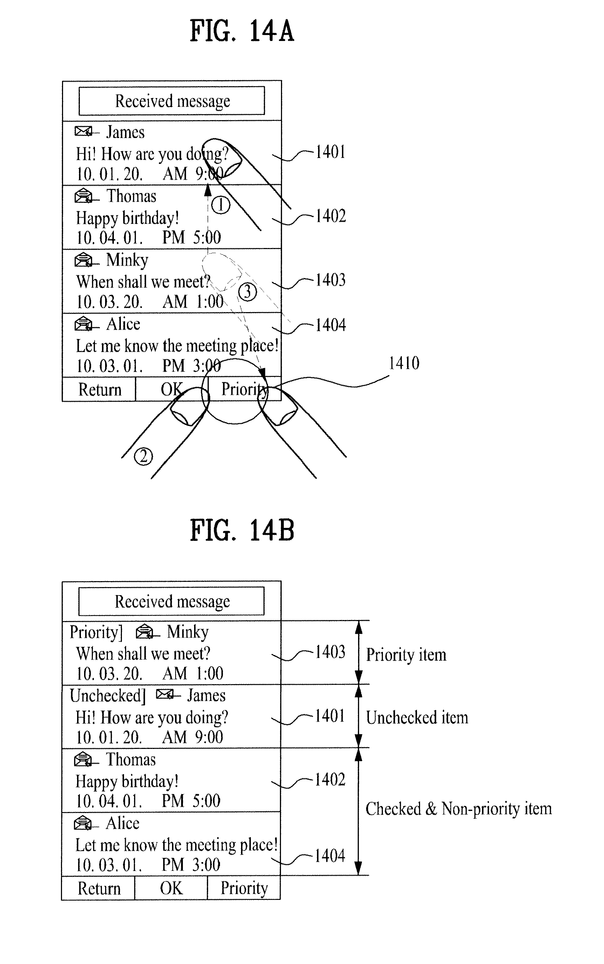

In the following description, a process for designating a priority counterpart terminal in a message list display mode and displaying the priority counterpart terminal at a specific position may be explained with reference to FIGs. 14A to 14C.

FIGs. 14A to 14C are screen configurations for designating a priority counterpart terminal in a message list display mode and then displaying it at a specific position.

Referring to FIG. 14A, while a message list is displayed, the mobile terminal 100 may receive an input of a touch & drag action 1 from a third message item 1403 to a first message item 1401, a selection action 2 of a priority region 1410 after selection of the third message item 1403 or a touch & drag action 3 from the third message item 1403 to the priority region 1410.

Each of the first to third actions 1 to 3 can include an action for designating a counterpart terminal corresponding to the third message item 1403 to a priority counterpart terminal. The present embodiment is non-limited by each of the first to third actions and can include any action for designating a priority counterpart terminal.

In particular, the first action 1 can include an action for designating a specific position for displaying the third message item to a position of the first message item 1401 as well. Specific positions may be previously specified for the second action 2 and the third action 3.

In attempting to entirely designate a plurality of counterpart terminals to priority counterpart terminals by the first action 1 and the third action 3, after a plurality of message items have been selected, it may receive an input of a touch & drag action to the first message item 1401 from one of a plurality of the selected message items (first action) or an input of a touch & drag action to the priority region 1410 from one of a plurality of the selected message items (third action).

Referring to FIG. 14B, the mobile terminal 100 may designate a counterpart terminal 'Minky' corresponding to the third message item 1403 to a priority counterpart terminal and may then display the third message item 1403 at a specific position on the message list regardless of an arrangement reference of message items.

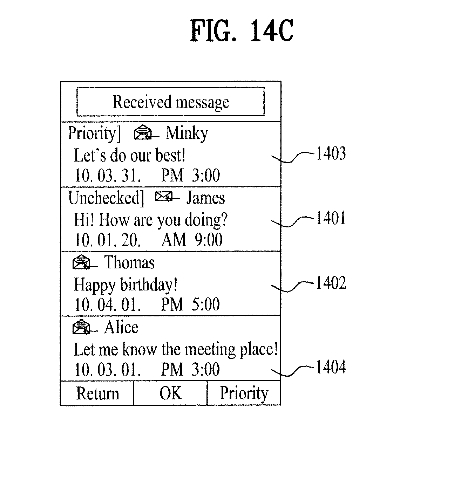

Moreover, referring to FIG. 14C, in receiving a new message from Minky, the mobile terminal 100 may display a content relevant to the newly received message within the third message item 1403 while displaying the third message item 1403 at the specific position.

After completion of the designation to the priority counterpart terminal, even if a new message is received from another counterpart terminal rather than the priority counterpart terminal, the priority item 1403 may keep being displayed at the specific position and its display position is not changed by a reception hour of the new message received from another counterpart terminal and/or the like.

The mobile terminal 100 may randomly change a sorting order of message items (priority item and unchecked item are included) included in a message list by a user selection.

The mobile terminal 100 may delete message items (priority item and unchecked item are included) included in a message list by a user selection entirely or in part.

For ease of description, a message list may be limited to a counterpart based message list. Therefore, a message list may include a per-counterpart message item as a basic component.

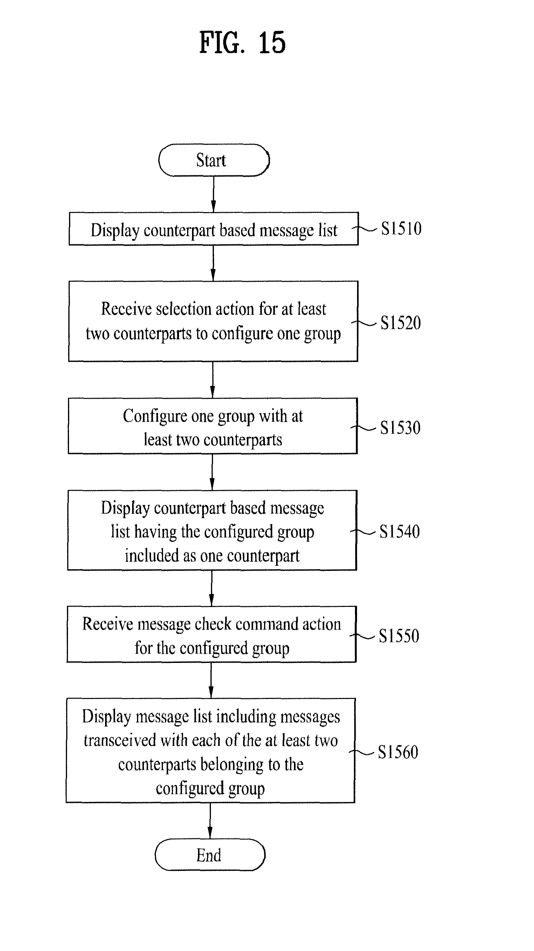

FIG. 15 is a third flowchart for a method of displaying a message list in a mobile terminal according to one embodiment of the present invention.

Under control of the controller 180, the mobile terminal 100 may generate a counterpart based message list including a plurality of message items corresponding to a plurality of counterpart terminals having transceived messages with the mobile terminal 100 and the mobile terminal 100 may then display, in operation S1510, the generated counterpart based message list on the display 151.

The displaying operation S1510 may be performed by selection of a menu item corresponding to a display of the counterpart based message list through a menu search or selection of a key region or a key corresponding to a display of the counterpart based message list.

The displayed counterpart based message list may include message items corresponding to a plurality of the counterparts having transceived messages with the mobile terminal 100, respectively. Information (e.g., schematic content, title, reception date/hour, counterpart information_name, phone number, photo, etc.) on a latest message transceived with a corresponding counterpart may be displayed in each of the message items.

An arrangement reference of message items on the counterpart based message list can include an order of a late transceiving hour of a latest message transceived with a corresponding counterpart or an order of an early transceiving hour of a latest message transceived with a corresponding counterpart.

The mobile terminal 100 may receive a selection action, in operation S1520, for at least two message items corresponding to at least two counterparts, which are to be configured as one group, from among a plurality of the message items included in the displayed counterpart based message list from a user.

This selection action may include a touch action performed on a touchscreen when the display 151 includes the touchscreen.

The mobile terminal 100 may configure a group, in operation S1530, with the at least two counterparts corresponding to the at least two message items selected by the selection action received in the receiving operation S1520

A message item of a group configured with at least two counterparts may be called a group message item and a message item corresponding to an individual counterpart may be called an individual message item.

The group may be configured to correspond to the selection action (operation S1520) received from a user in displaying a counterpart based message list and can include a group previously registered with a phonebook.

In particular, in using the group previously registered with the phonebook, if a user selects a menu item or a key region corresponding to a phonebook group application, one group may be configured with at least two counterparts belonging to the same group on the phonebook from among a plurality of counterparts included in a counterpart based message list. In this case, a group name registered with the phonebook may be displayed at a counterpart name displayed in a group message item.

The group configured with the at least two counterparts in the configuring operation S1530 may be represented as one group message item on the counterpart based message list.

Information of a latest message transceived within one of the two counterparts configuring one group may be displayed in the corresponding group message item and one group message item corresponding to the at least two counterparts configuring one group may be generated.

If at least two counterparts configuring one group exist, one group message item corresponding to the group including the at least two counterparts and at least two individual message items respectively corresponding to the at least two counterparts belonging to the group may be included in the counterpart based message list.

A plurality of group message items may exist and one counterpart may belong to different groups.

The mobile terminal 100 may display, in operation S1540, the counterpart based message list, in which the group configured in the configuring operation S1530 is included as one message item, using the display 151 under control of the controller 180.

For example, a group message item corresponding to the configured group may be displayed.

Moreover, if the arrangement reference in the arrangement of the counterpart based message list is a transceiving hour of a lasted transceived message, the corresponding group message item may be arranged on the counterpart based message list according to the transceiving hour of the latest message transceived with the counterpart terminal belonging to the configured group.

A process for configuring/releasing a group including at least two counterpart terminals and a corresponding display of a counterpart based message list may be explained with reference to the accompanying drawings.

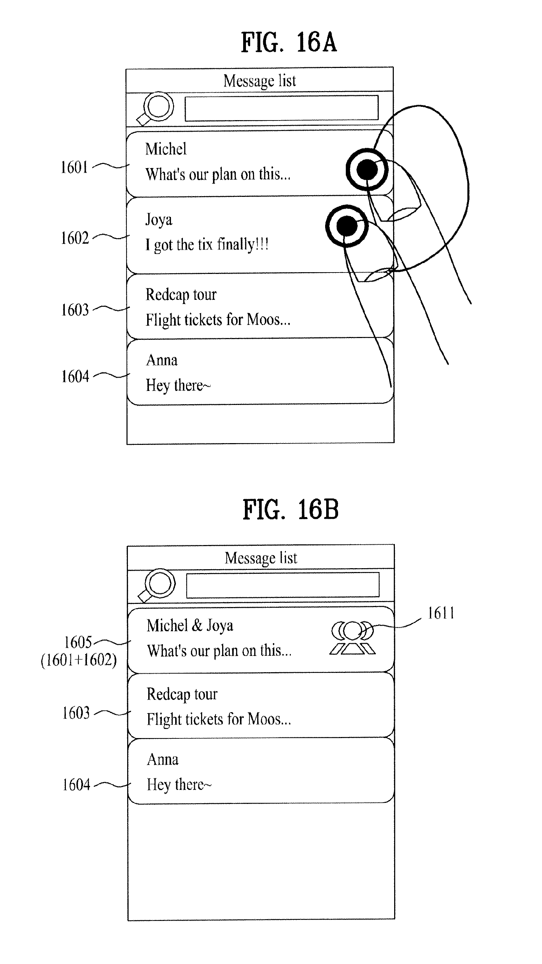

FIGs. 16A to 20C are screen configurations for configuring a group including at least two counterparts.

Referring to FIG. 16A and FIG. 16B, in case of receiving a touch action for tying first and second message items 1601 and 1602, which correspond to first and second counterparts located adjacent to each other on a counterpart based message list, together from a user [FIG. 16A], the mobile terminal 100 may generate a group message item 1605 of a group configured with the first and second counterparts and then display the generated group message item 1605 on the counterpart based message list [FIG. 16B].

In so doing, if a transceiving hour of a latest message transceived with the first or second one of a plurality of counterparts included in the counterpart based message list is the latest, the group message item 1605 may be arranged in a first row of the counterpart based message list.

Names of the first and second counterparts (e.g., Michel & Joya) may be displayed as a name of the group message item 1605. An indicator 1611 indicating that the corresponding message item is a group message item may be displayed within the group message item 1605.

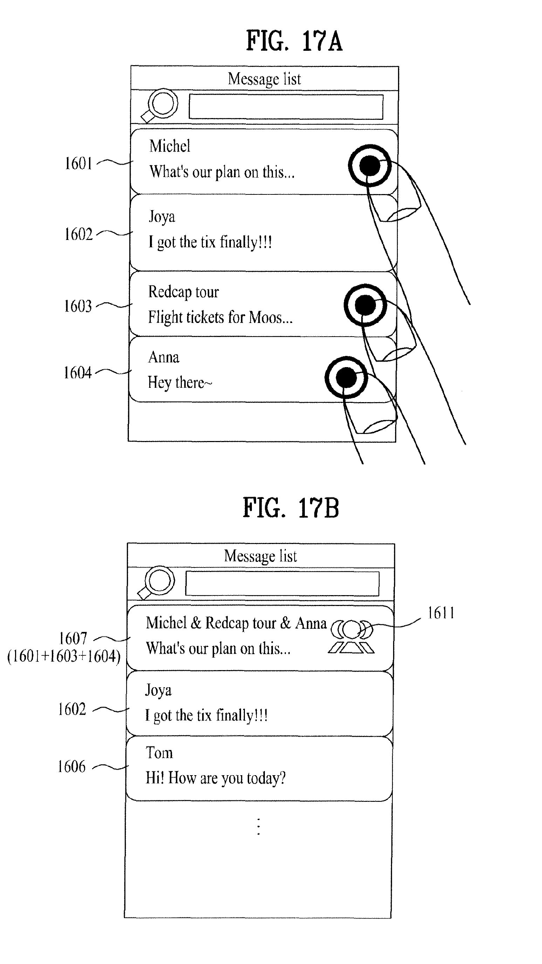

Referring to FIG. 17A and Fig. 17B, in case of receiving touch actions, which performed on a first message item 1601, a third message item 1603 and a fourth message item 1604 corresponding to a first counterpart, a third counterpart and a fourth counterpart, respectively, on a counterpart based message list [FIG. 17A], the mobile terminal 100 may generate a group message item 1607 of a group configured with the first, third and fourth counterparts and then display the generated group message item 1607 on the counterpart based message list [FIG. 17B].

In this example, it may be necessary to distinguish whether the touch action for the message item corresponding to the counterpart is a display command action for displaying a message list including messages transceived with the counterpart or a group configuration command action.

For example, if the display command action is a single touch, the group configuration command action can include multiple touches. If the display command action is a single touch, the group configuration command action can include multiple touches (or multi-touch). If the display command action is a touch having a first duration, the group configuration command action can include a touch having a second duration.

After the touch action on the fourth message item 1604, which was touched last, has been inputted, if a touch action on another message item is not inputted during a predetermined time, the mobile terminal 100 may configure a group with the first, third and fourth counterparts.

Alternatively, if the touch action on the last-touched fourth message item 1604 is released after maintained during a predetermined time (this is longer than the touch duration for the formerly-touched first/third message item 1601/1603), the mobile terminal 100 may configure a group with the first, third and fourth counterparts.

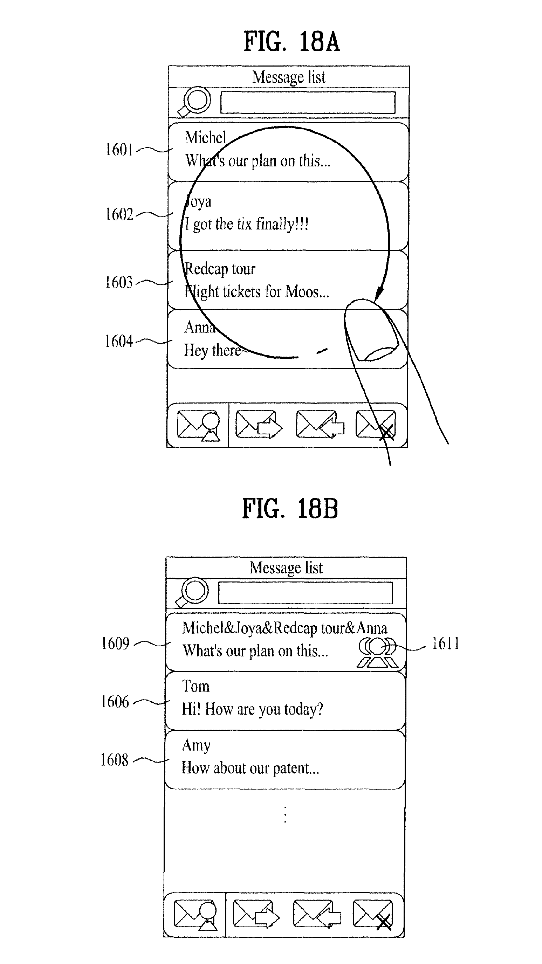

Referring to FIG. 18A and FIG. 18B, in receiving a touch & drag action having a prescribed shape on a counterpart based message list from a user [Fig. 18A], the mobile terminal 100 may generate a group message item 1609 of a group configured with counterparts corresponding to message items included within or across the prescribed shape and then display the generated group message item 1609 on the counterpart based message list [FIG. 18B].

The prescribed shape may include a looped curve of a circle, a square, a triangle and/or the like.

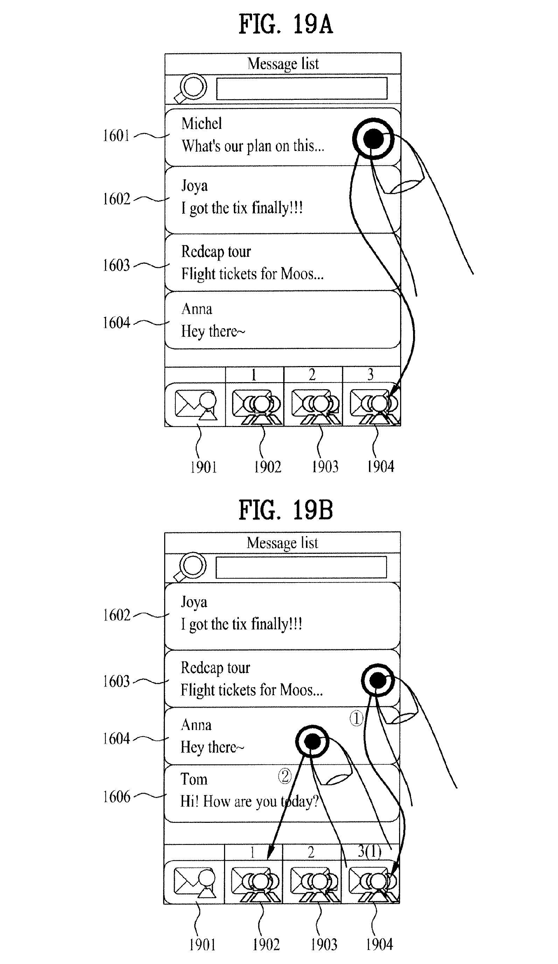

Referring to FIGs. 19A to 19C, the mobile terminal 100 may display a group release region 1901 and group configuration regions 1902 to 1904 on a prescribed region of a screen on which a counterpart based message list is displayed.

The group release region 1901 may be a region for group release. Each of the first to third group configuration regions 1902 to 1904 can include a region for configuring a group (one of first to third groups) corresponding to each region.

Referring to FIG. 19A and FIG. 19B, in receiving a touch & drag action to the third group configuration region 1904 corresponding to the third group from the first message item 1601 included in the counterpart based message list [FIG. 19A], the mobile terminal 100 may enable the first counterpart corresponding to the first message item 1601 to be included in the third group [FIG. 19B].

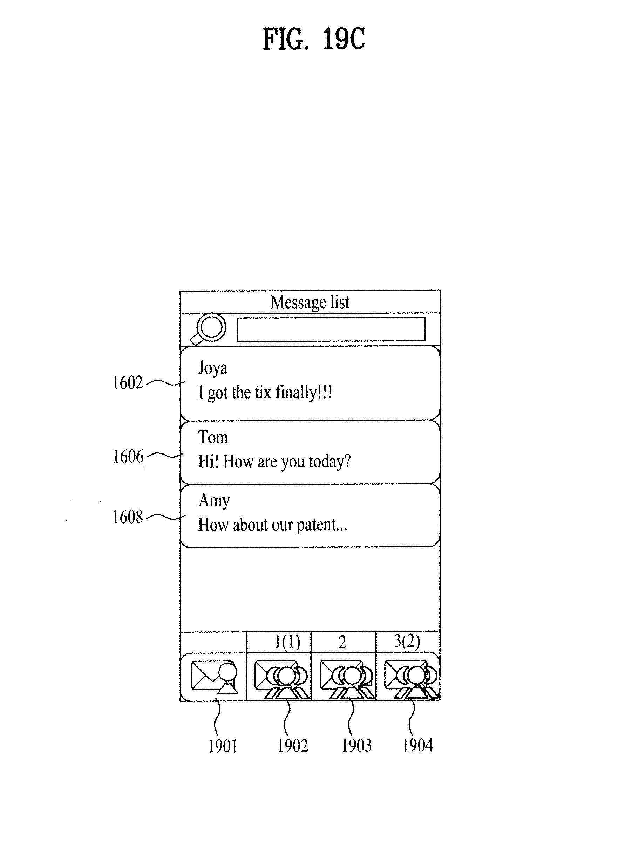

Referring to FIG. 19B and FIG. 19C, in receiving a touch & drag action to the third group configuration region 1904 corresponding to the third group from the third message item 1603 included in the counterpart based message list and a touch & drag action to the first group configuration region 1902 corresponding to the first group from the fourth message item 1604 [FIG. 19B], the mobile terminal 100 may enable the third counterpart corresponding to the third message item 1603 to be included in the third group and also enable the fourth counterpart corresponding to the fourth message item 1604 to be included in the first group [FIG. 19C].

According to FIG. 19B and FIG. 19C, a message item corresponding to a counterpart included in a specific group may not be displayed on the counterpart based message list.

If the group configuration action is completed, the group message item of the group generated from the group configuration action may be displayed on the counterpart based message list. The group message item may not be displayed on the counterpart based message list and its role may be played by the corresponding group configuration region. For example, if a user selects the third group configuration region 1904, it may display a message list including messages transceived with the first and third counterparts corresponding to the third group configuration region 1904.

According to FIG. 19B and FIG. 19C, a number of counterparts included in a corresponding group may be displayed in each group configuration region.

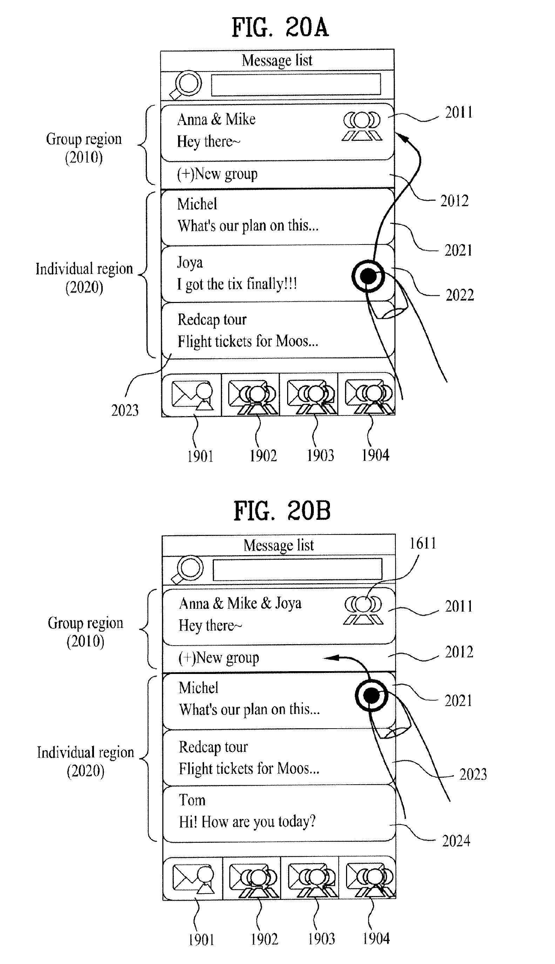

Referring to FIGs. 20A to 20C, the mobile terminal 100 may divide a counterpart based message list into a group region 2010 and an individual region 2020. The mobile terminal 100 may display a group message item 2011 and an item (hereafter called a group generation item) 2012 corresponding to group generation within the group region 2010 and also display individual message items 2021 to 2023 within the individual region 2020.

Referring to FIG. 20A and FIG. 20B, in receiving a touch & drag action to the group message item 2011 from the second individual message item 2022 [FIG. 20A], the mobile terminal 100 may enable a counterpart Joya corresponding to the second individual message item 2022 to be included in a group corresponding to the group message item 2011 [FIG. 20B]. The second individual message item 2022 may not be further displayed in the individual region 2020.

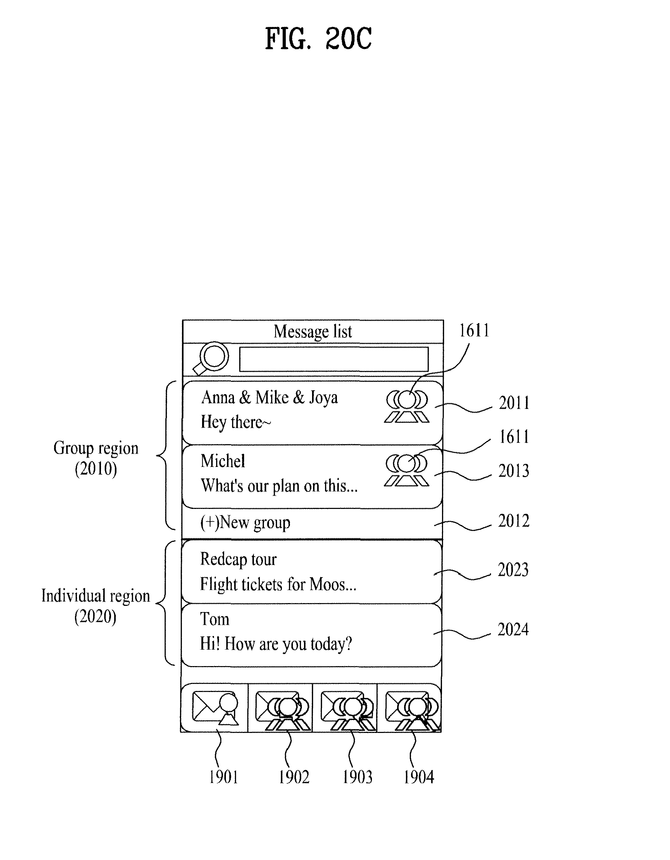

Referring to FIG. 20B and FIG. 20C, in receiving a touch & drag action to the group generation item 2012 from the first individual message item 2021 [FIG. 20B], the mobile terminal 100 may generate a new group including a counterpart Michel corresponding to the first individual message item 2021 and then display the group message item 2013 corresponding to the generated group within the group region 2010 [FIG. 20C]. The first individual message item 2021 may not be further displayed in the individual region 2020.

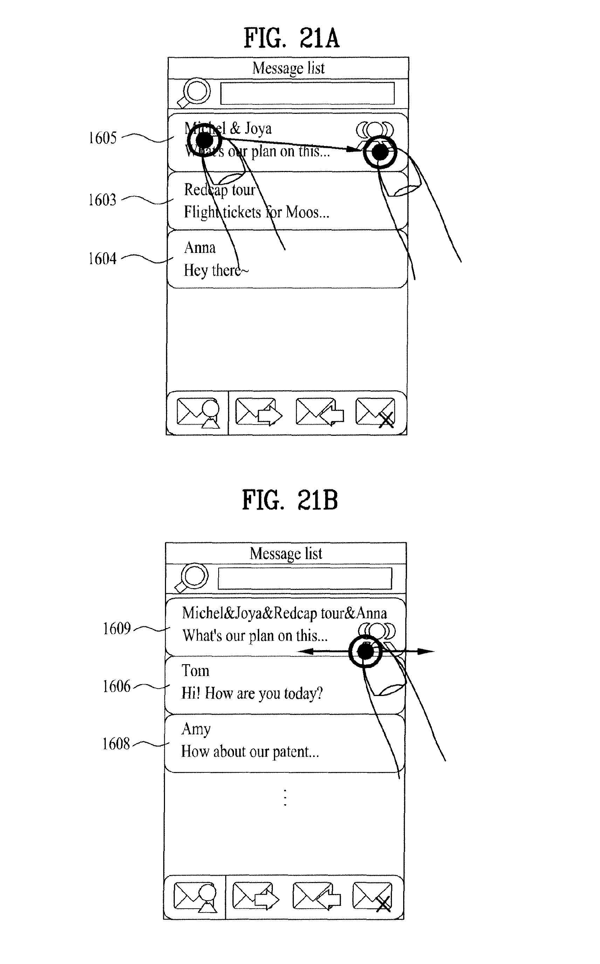

FIGs. 21A to 22C are screen configurations for releasing a group including at least two counterparts.

Referring to FIG. 21A, in receiving an input of a multi-touch on a group message item 1605 and an input of a touch & drag action for widening a distance between two pointers of the inputted multi-touch, the mobile terminal 100 may release a group corresponding to the group message item 1605.

Referring to FIG. 21B, in receiving an input of a touch action for shaking a group message item 1609 a predetermined number of times side to side (or up and down), the mobile terminal 100 may release a group corresponding to the group message item 1609.

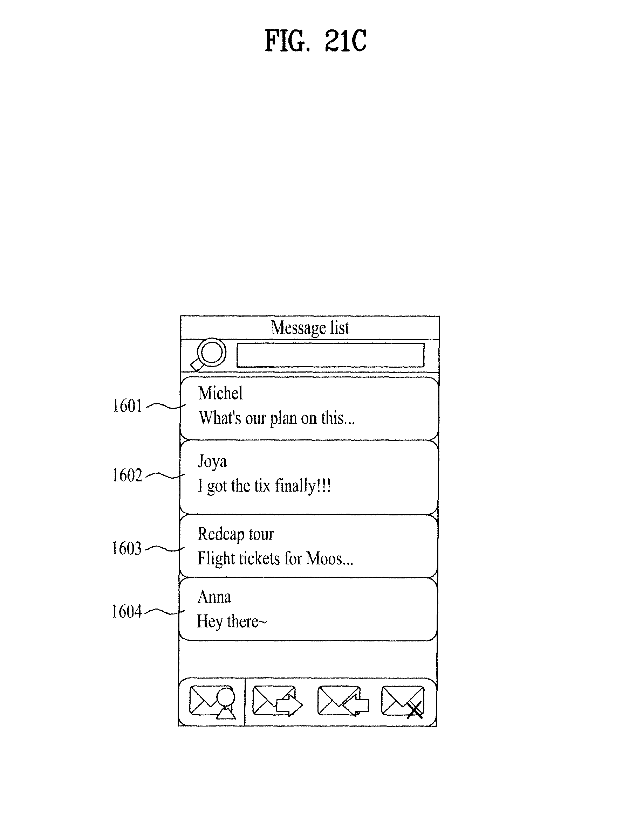

Referring to FIG. 21C, as the group releasing process is performed in FIG. 21A or FIG. 21B, the mobile terminal 100 may display individual message items respectively corresponding to counterparts included in a group corresponding to the group message item 1605 or 1609 on a counterpart based message list.

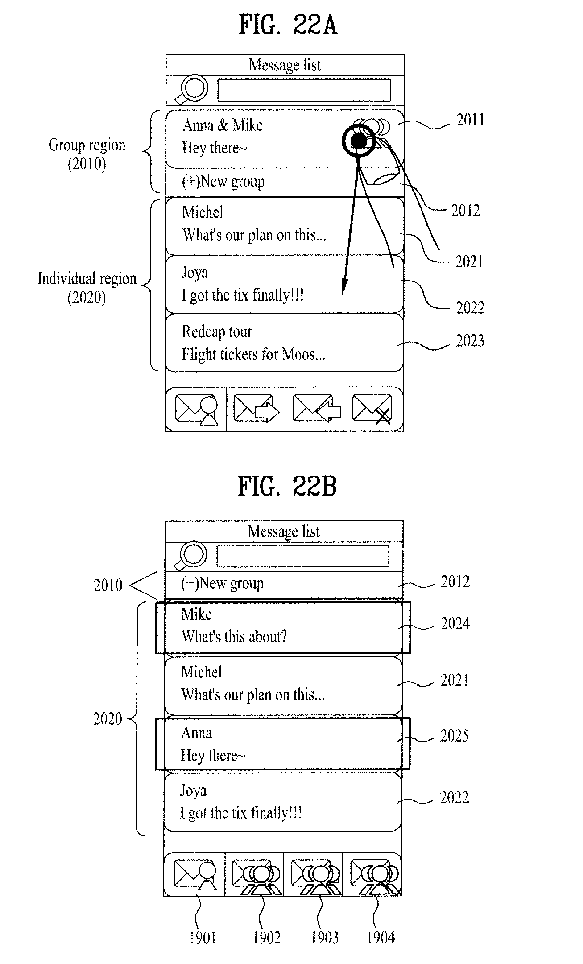

Referring to FIGs. 22A to 22C, in receiving an input of a touch & drag action to an individual region 2020 from a group message item 2011 included in a group region 2010 [FIG. 22A], the mobile terminal 100 may release a group corresponding to the group message item 2011 and then display individual message items 2024 and 2025 respectively corresponding to the counterparts included in the group message item 2011 within the individual region 2020. In this example, the group message item 2011 is not further displayed.

In particular, referring to FIG. 22B, the individual message items 2024 and 2025 may be arranged within the individual region 2020 according to an order of a transceiving hour of a latest message transceived with each of a plurality of counterparts belonging to the group corresponding to the group message item 2011.

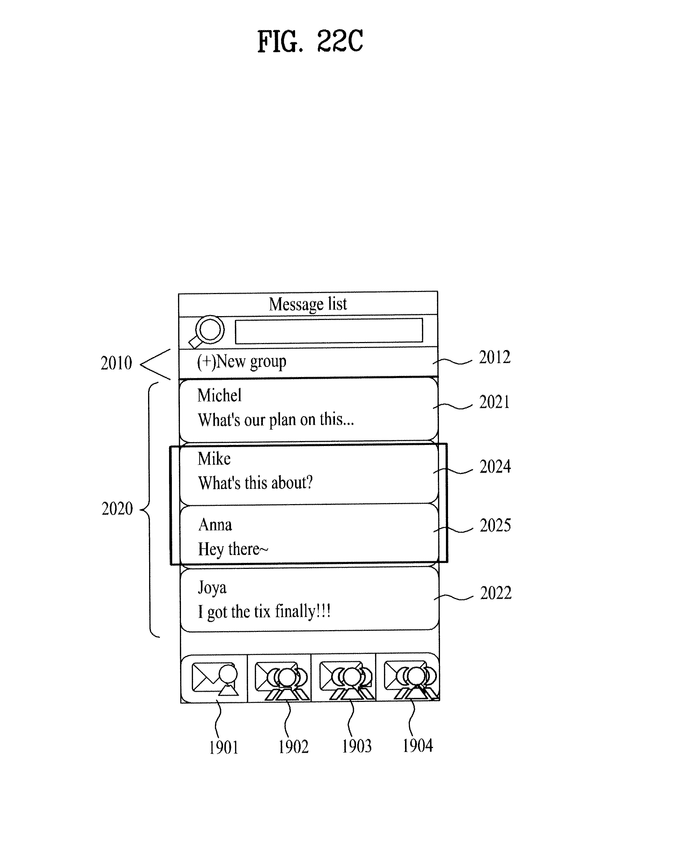

Referring to FIG. 22C, individual message items 2024 and 2025 may be sequentially arranged ahead of or behind the individual message item 2022 to which an end point of a touch & drag action from the group message item 2011 to the individual region 2020 belongs.

In an action of shaking the terminal itself is inputted, the group releasing process may be executed. The group releasing process may be executed when a menu item or a key region corresponding to the group release is selected.

Referring now to FIG. 15, the mobile terminal 100 may receive, in operation S1550, a message check command action for the configured group using the counterpart based message list (group message item included) displayed in the displaying operation S1540.

For example, the group message item is included in the displayed counterpart based message list. In receiving a touch action (having a touch pattern corresponding to the message check command action) on the group message item, it may check messages transceived with the counterparts belonging to the group corresponding to the group message item touched by the touch action.

In receiving the check command action in the receiving operation S1550, the mobile terminal 100 may display, in operation S1560, a message list including the messages transceived with each of the at least two counterparts belonging to the configured group.

In the displayed message list, the messages transceived with each of the at least two counterparts belonging to the corresponding group may be arranged in an order of an early or late transceiving hour.

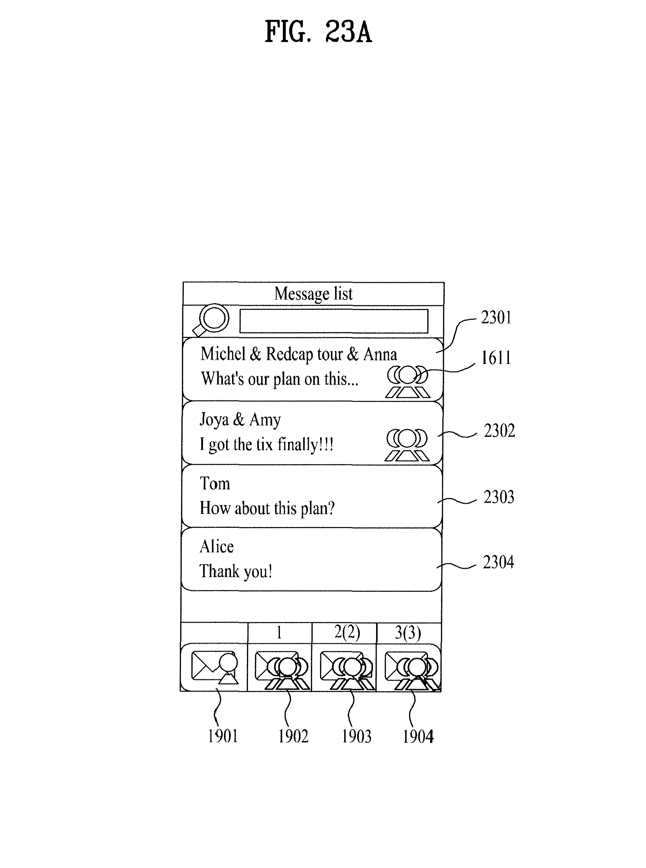

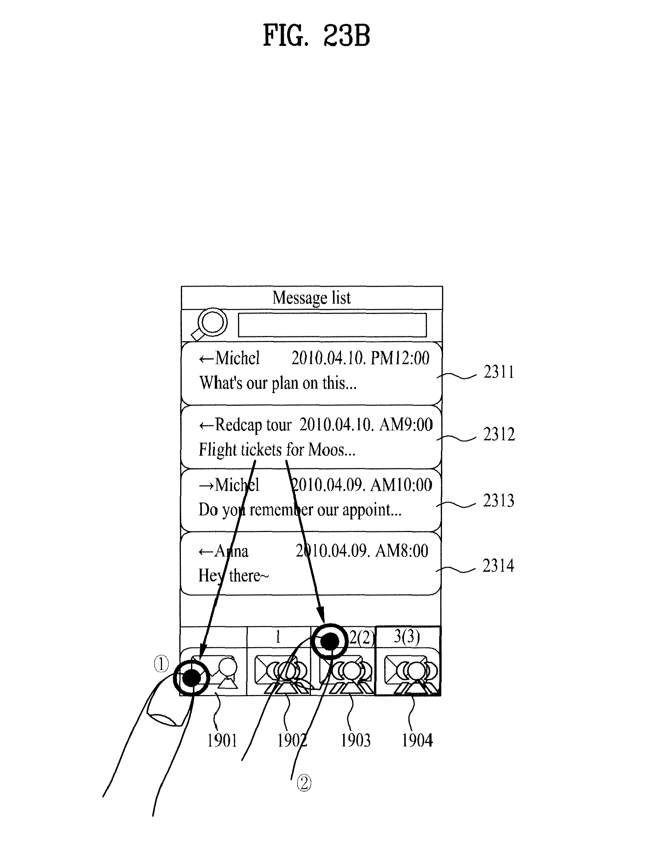

This may be described in detail with reference to FIG. 23A and FIG. 23B.

FIG. 23A and FIG. 23B are screen configurations for displaying a message list including messages transceived with at least two counterparts belonging to a specific group.

Referring to FIG. 23A, the mobile terminal 100 may receive a touch action on a group message item 2301 from a user. The touch action may correspond to a message check command action from a group corresponding to the group message item 2301 in a counterpart based message list.

Referring to FIG. 23B, in receiving the message check command action for the group corresponding to the group message item 2301 in FIG. 23A, the mobile terminal 100 may display a message list including messages transceived with counterparts Michel, Redcap tour and Anna belonging to a group corresponding to the group message item 2301.

The messages included in the message list may be sequentially arranged top to bottom in order of a late transceiving hour.

A group release region 1901 and first to third group configuration regions 1902 and 1904 are displayed in FIGs. 23A-23B. If two counterparts are included in a second group, '(2)' is displayed in the second group configuration region 1903 corresponding to the second group. If three counterparts are included in a third group, '(3)' is displayed in the third group configuration region 1904 corresponding to the third group.

In receiving a check command action for a specific message included in the message list, the mobile terminal 100 may display a content of the specific message on the screen or display a response message write window on the screen in response to the specific message.

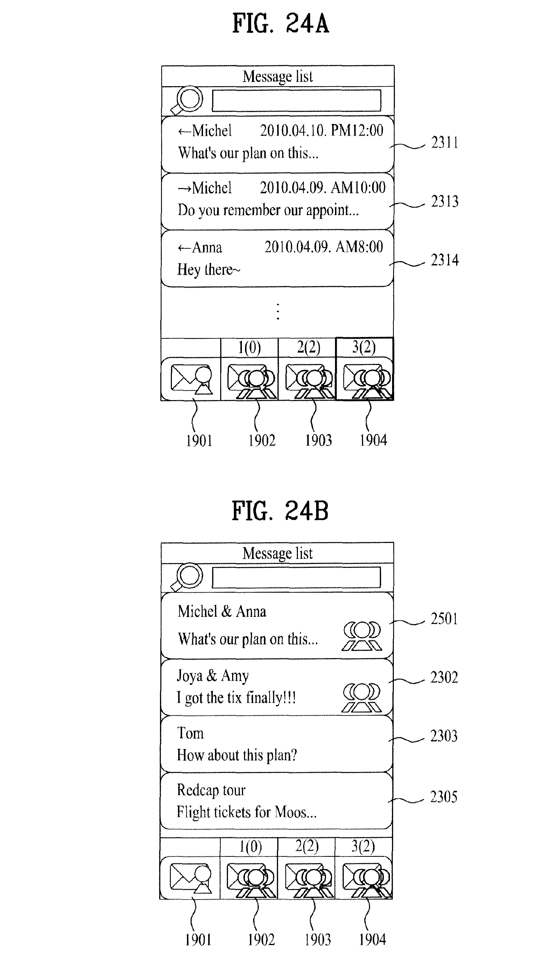

An example of deleting a specific one of at least two or more counterparts belonging to a specific group from the specific group may be described with reference to FIGs. 24A to 25B.

FIGs. 24A to 25B are screen configurations for an example of deleting a specific one of at least two counterparts belonging to a specific group.

FIG. 24A and FIG. 24B show an example that a touch & drag action from a received message item 2312 to a group release region 1901 is received from the second counterpart in the message list corresponding to the third group shown in FIG. 23B. The embodiment may be applicable to an example that a touch action on the received message item 2312 and a touch action on the group release region 1901 are received.

Referring to FIG. 24A and FIG. 24B, the mobile terminal 100 may delete the second counterpart from the third group. Therefore, the counterpart number displayed in the third group configuration region 1904 corresponding to the third group may be changed into (2) from (3) [cf. FIG. 23B, FIG. 24A, FIG. 24B].

Referring to FIG. 24A, the mobile terminal 100 may delete a transmitted message item (not shown in the drawing) or a received message item 2312 with the second counterpart from the message list configured with messages transceived with the counterpart terminals belonging to the third group.

Referring to FIG. 24B, the mobile terminal 100 may delete a name part corresponding to the second counterpart from the group name displayed within a group message item 2501 corresponding to the third group on the counterpart based message list.

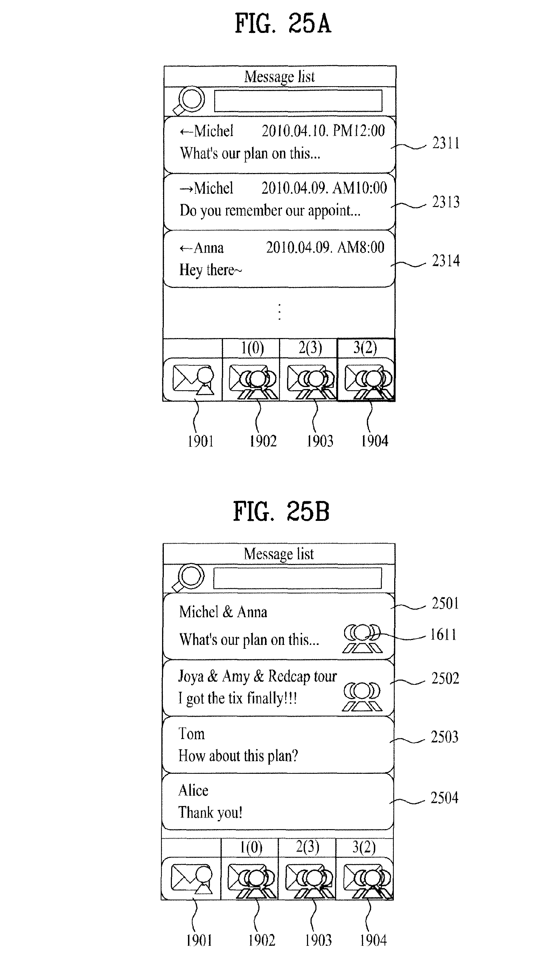

FIG. 25A and FIG. 25B show an example that a touch & drag action from the received message item 2312 to the second group configuration region 1903 is received from the second counterpart in the message list corresponding to the third group shown in FIG. 23B. The embodiment may be applicable to an example that a touch action on the received message item 2312 and a touch action on the second group configuration region 1903 are received.

Referring to FIG. 25A and FIG. 25B, the mobile terminal 100 may add the second counterpart to the second group instead of deleting it from the third group. Therefore, the counterpart number displayed in the third group configuration region 1904 corresponding to the third group may change into (2) from (3) and the counterpart number displayed in the second group configuration region 1903 corresponding to the second group may change into (3) from (2) [cf. FIG. 23B, FIG. 25A, FIG. 25B].

In particular, referring to FIG. 25A, the mobile terminal 100 may delete a transmitted message item or a received message item 2312 with the second counterpart from the message list configured with messages transceived with the counterpart terminals belonging to the third group.

Referring to FIG. 25B, the mobile terminal 100 may delete a name part corresponding to the second counterpart from the group name displayed within a group message item 2501 corresponding to the third group on the counterpart based message list and may add the name part corresponding to the second counterpart to the group name displayed within the group message item 2502 corresponding to the second group.

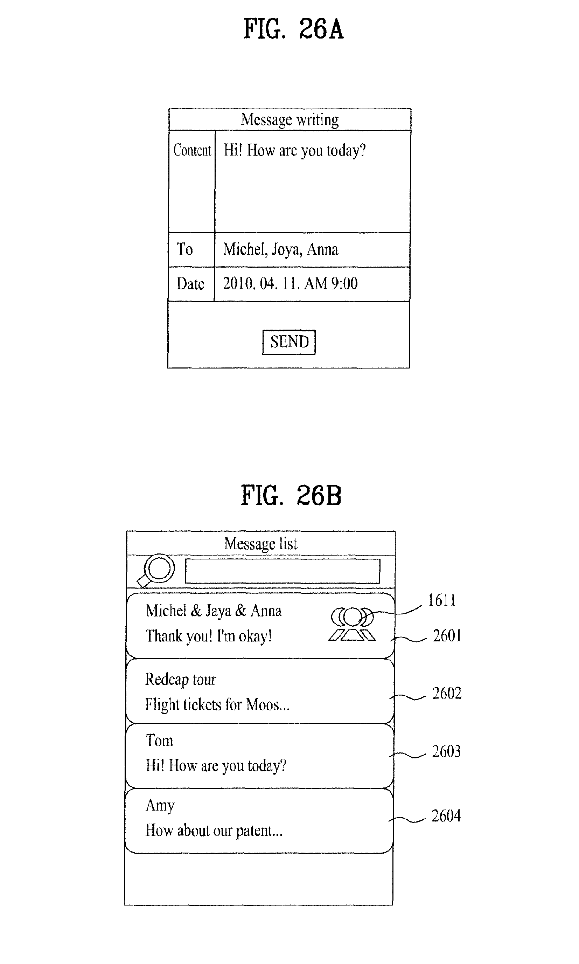

An example of automatically configuring a group including a plurality of counterparts in sending a message to a plurality of the counterparts may be explained with reference to FIGs. 26A to 26C.

FIGs. 26A to 26C are screen configurations for automatically configuring a group including a plurality of counterparts in sending a message to a plurality of the counterparts.

Referring to FIG. 26A, the mobile terminal 100 may write and transmit a message having at least two or more counterparts Michel, Joya and Anna set to common recipients (batch arrival).

Referring to FIG. 26B, the mobile terminal 100 may group the at least two or more counterparts Michel, Joya and Anna, who are common recipients of the transmitted message, into one group and then display a group message item 1601 corresponding to the configured group on a counterpart based message list, under control of the controller 180.

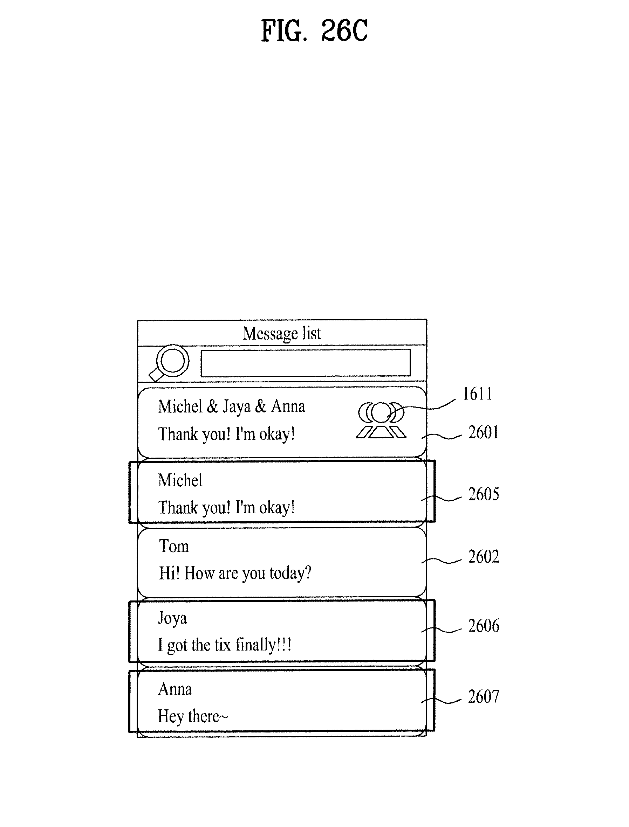

Referring to FIG. 26C, the mobile terminal 100 may display the group message item 1601 on the counterpart based message list and also display individual message items 1605 to 1607 respectively corresponding to the at least two or more counterparts Michel, Joya and Anna set to the common recipients, under control of the controller 130.

For example, if a message is newly received from Michel, a message content displayed in the group message item 1601 and a message content displayed in the individual message item 1605 may be updated with reference to the newly received message.

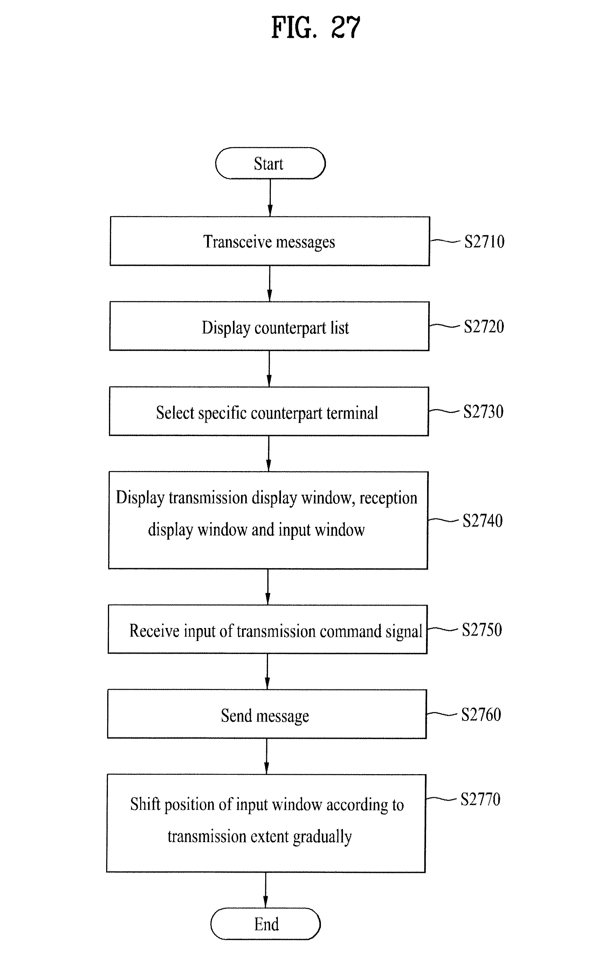

A method of displaying a message transceived with a counterpart terminal corresponding to a specific message item selected from a message list may be explained with reference to FIGs. 27 to 36E.

FIG. 27 is a flowchart for a method of displaying a message in a mobile terminal according to one embodiment of the present invention.

The mobile terminal 100 may transceive, in operation S2710, at least one message with at least one counterpart terminal via the wireless communication unit 110 under control of the controller 180.

A message may include a text message or a multimedia message. Any system capable of transceiving data with a counterpart terminal may be applicable as well as to the message. For example, email, instant messaging service, data communication by SNS (social networking service) and/or the like may be included.

The mobile terminal 100 may display, in operation S2720, a counterpart based message list including at least one message item corresponding to the at least one counterpart terminal having transceived messages with the mobile terminal 100 via the display 151 under control of the controller 180.

The counterpart based message list may be displayed when a menu item or a key (or a key region) corresponding to a counterpart based message list display is selected by a user.

The at least one or more message items included in the counterpart based message list may be enumerated in order based on a transceiving hour of the latest message transceived between the mobile terminal 100 and the corresponding counterpart terminal. In the message region included in the counterpart based message list, a content (e.g., a partial content, a message title, etc.) of the latest transceived message, a transceiving hour of the latest transceived message, an image or name of the corresponding counterpart terminal and/or the like may be displayed.

Although a plurality of messages are transceived with a specific counterpart terminal, one message item corresponding to the specific counterpart terminal may be included in the counterpart based message list. Message items amounting to the number of messages may be occasionally included (cf. message based message list).

The mobile terminal 100 may receive, in operation S2730, an input of a selection action from a user on a specific message item corresponding to a specific counterpart terminal from among the at least one or more message items included in the displayed counterpart based message list via the user input unit 130.

For example, the selection action can include at least one of a touch action on one point within the specific message item, an OK key input after selection of the specific message item, an OCK action (e.g., shaking, inclining at predetermined angle, etc.) after selection of the specific message item and/or the like.

The mobile terminal 100 may display, in operation S2740, the at least one message transceived with the specific counterpart terminal corresponding to the selected specific message item via the display 151 under control of the controller 180.

In the displaying operation S2740, the message transmitted to the specific counterpart terminal is displayed via a transmission display window and the message received from the specific counterpart terminal is displayed via a reception display window, for example.

In the displaying operation S2740, the mobile terminal may display an input window (hereafter called a message input window) for inputting a message content of a message, which is to be transmitted to a specific counterpart terminal, together with the transmission display window and the reception display window.

For example, the transmission and reception display windows may be displayed at a center of the screen, while the message input window is displayed on a lower end of the screen.

Regarding a sorting sequence of the transmission display window and the reception display window, at least one reception display window and at least one reception display window may be sorted and displayed based on a transmission hour of a transmitted message corresponding to each of the at least one transmission display window and a reception hour of a received message corresponding to each of the at least one reception display window.

For example, the transmission display window and the reception display window may be sorted in order of an early or late transmission hour or an early or late reception hour.

The transmission display window and the reception display window can include indicators to indicate a window for displaying a transmitted message and a window for displaying a received message, respectively.

The transmission display window and the reception display window can differ from each other in color, shape and position of an input window as an indicator. The transmission display window and the reception display window can differ from each other in letter type and color of a message content displayed therein as an indicator.

For example, each of the transmission display window and the reception display window has a word balloon shape, a tail of the word balloon corresponding to the transmission display window is positioned at a right lower end and a tail of the word balloon corresponding to the reception display window is positioned at a left lower end.

Each of the transmission display window and the message input window can include the same indicator to be distinguished from the reception display window.

For example, regarding the same indicator, the transmission display window and the message input window may be identical to each other in at least one of color, shape and position. Alternatively, the transmission display window and the message input window may be identical to each other in at least one of a letter type and a letter color of a message content displayed in each of the transmission display window and the message input window. Alternatively, the same indicator can include an indicator of the transmission display window to be distinguished from the reception display window.

For example, the transmission display window and the message input window may be located at the right part of the screen, while the reception display window is located at the left part of the screen. Alternatively, in case that the transmission display window, the reception display window and the message input window have word balloon shapes, respectively, a tail of the word balloon corresponding to each of the transmission display window and the message input window is located at a right lower end, while a tail of the word balloon corresponding to the reception display window may be located at a left lower end. Alternatively, each of the transmission display window and the message input window is represented as red, while the reception display window is represented as blue.

In the following description, a process for displaying a transmission display window and a reception display window using a same indicator by being distinguished from a reception display window and a display of the transmission display window and the reception display window according to various embodiments may be explained with reference to the accompanying drawings.

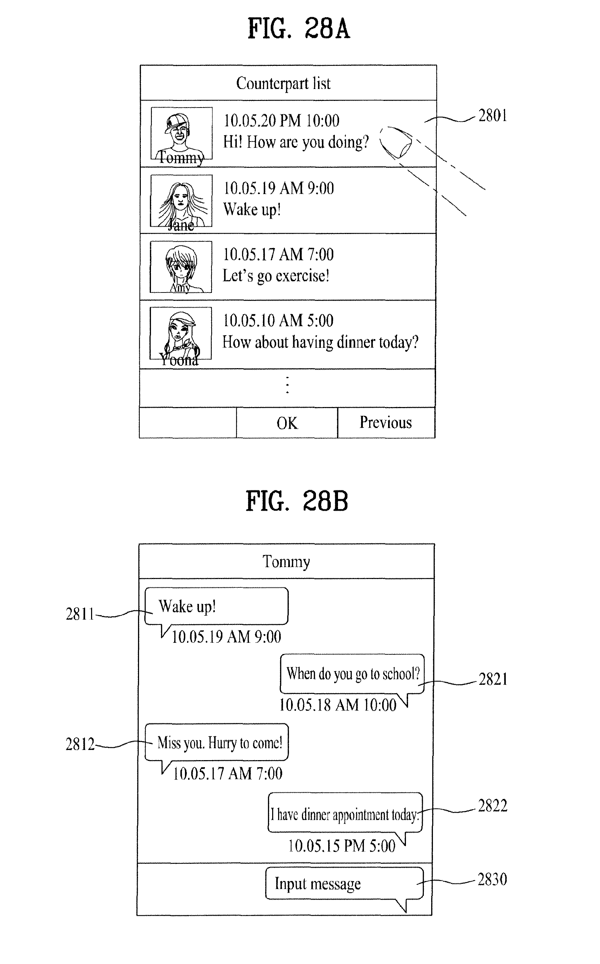

FIGs. 28A to 28D are screen configurations for displaying a transmission display window and an input window in a manner of being distinguished from a reception display window using a same indicator.

Referring to FIG. 28A, the mobile terminal 100 may display a counterpart based message list including a plurality of message items corresponding to a plurality of counterpart terminals having transceived messages with the mobile terminal 100 itself and then receive a selection of a specific message item 2801 corresponding to a specific counterpart terminal from the counterpart based message list.

In the following description, assume that a first counter part terminal 'Tommy' 2801 is selected from the counterpart based message list.

Referring to FIG. 28B, a reception display window 2811/2812 has a word balloon shape having a tail attached to its left lower end. A transmission display window 2821/2822 has a word balloon shape having a tail attached to its right lower end. A message input window 2830 has a word balloon shape having a tail attached to its right lower end.

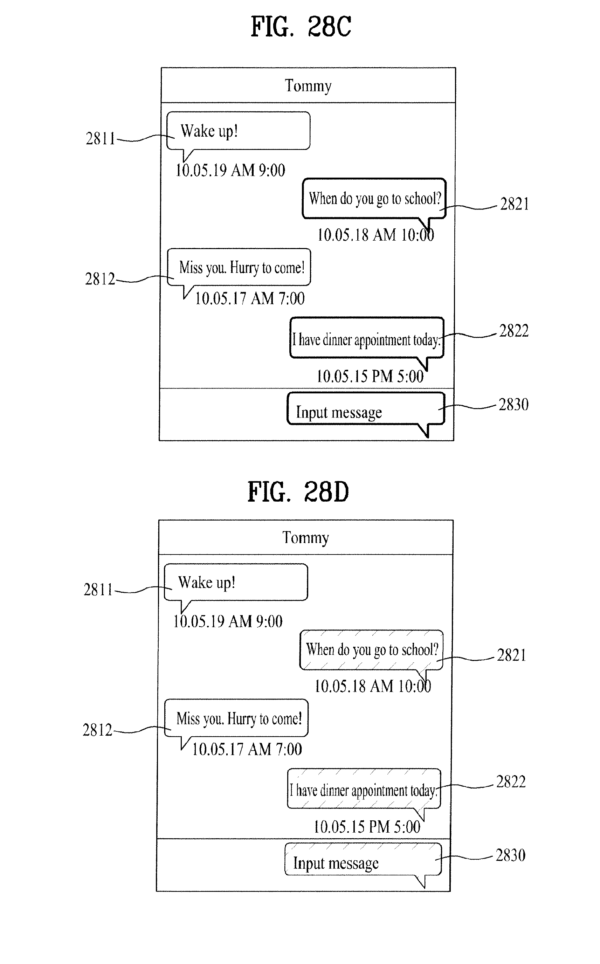

Referring to FIG. 28C, a display window outline of the reception display window 2811/2812 is displayed thin. A display window outline of the transmission display window 2821/2822 is displayed thick. An input window outline of the message input window 2830 is displayed thick.

Referring to FIG. 28D, the reception display window 2811/2812 has no pattern. The transmission display window 2821/2822 has an oblique line pattern. The message input window 2830 has an oblique line pattern.

Any displaying method for distinguishing each of the transmission display window and the message input window from the reception display window may be applicable to the present embodiment.

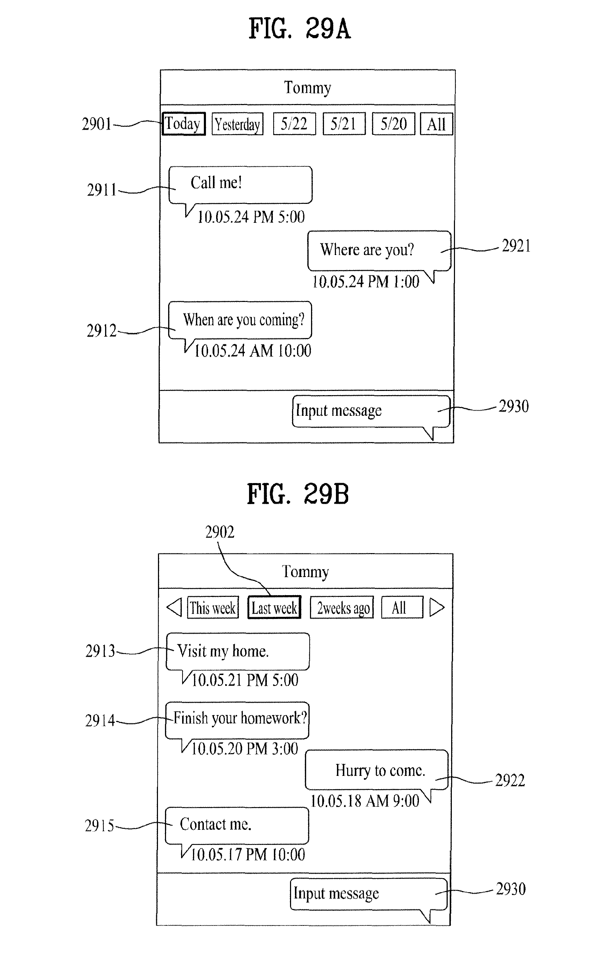

FIGs. 29A to 29C are screen configurations for distinguishably displaying a transmission display window and a reception display window by a predetermined term unit.

The mobile terminal 100 may distinguishably display a transmission display window and a reception display window using a transceiving time zone of a message corresponding to each of the transmission display window and the reception display window under control of the controller 180.

Referring to FIG. 29A, the mobile terminal 100 may display each of under control of the controller 180 corresponding to a message transceived with a first counterpart terminal by a unit of 1 day.

For example, 1-day unit term region corresponding to today (5/24), yesterday (5/23), 2 days ago (5/22), 3 days ago (5/21) and/or the like may be displayed on a prescribed region of a screen. The transmission display window and the reception display window, each of which may correspond to a message transceived on the date corresponding to the term region selected by a user, may be displayed on the screen.

For example, if the term region 'today' 2901 is selected, the mobile terminal 100 may display the transmission display window 2921 and the reception display windows 2911 and 2912, each of which may correspond to the message transceived with the first counterpart terminal today.

Referring to FIG. 29B, the mobile terminal 100 may display each of under control of the controller 180 corresponding to a message transceived with a first counterpart terminal by a unit of 1 week.

For example, 1-week unit term region corresponding to this week, last week, 2 weeks ago or the like may be displayed on a prescribed region of a screen. The transmission display window and the reception display window, each of which may correspond to a message transceived in the week corresponding to the term region selected by a user, may be displayed on the screen.

For example, if the term region 'last week' 2902 is selected, the mobile terminal 100 may display the transmission display window 2922 and the reception display windows 2913 to 2915, each of which may correspond to the message transceived with the first counterpart terminal last week.

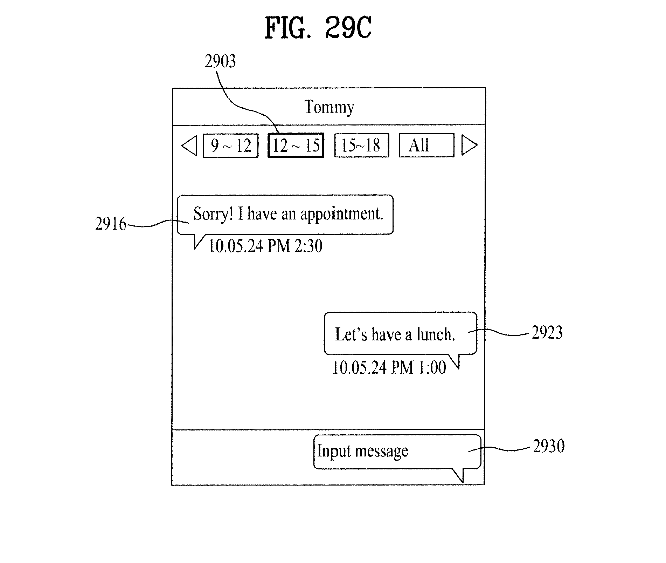

Referring to FIG. 29C, the mobile terminal 100 may display each of under control of the controller 180 corresponding to a message transceived with a first counterpart terminal by a unit of time zone.

For example, a time unit term region corresponding to a plurality of time zones is displayed on a prescribed region of a screen. The transmission display window and the reception display window, each of which may correspond to a message transceived on the time zone corresponding to the term region selected by a user, may be displayed on the screen.

For example, if the term region '12:00 - 15:00' 2903 is selected, the mobile terminal 100 may display the transmission display window 2923 and the reception display window 2916, each of which may correspond to the message transceived with the first counterpart terminal between 12:00 ∼ 15:00.

If the term region 'all' shown in one of FIGs. 29A to 29C is selected, the mobile terminal 100 may sequentially enumerate the transmission display window and the reception display window, each of which may correspond to the message transceived with the first counterpart terminal, regardless of the transceiving time zone based on transceiving hours, respectively.

The transceiving time zone may be set by a user or may include a time zone previously designated in the terminal.

While the transmission display windows and the reception display windows, each of which may correspond to the whole messages transceived with the first counterpart terminal, are displayed, when a specific term region is selected, the mobile terminal 100 may stop displaying the transmission and reception display windows corresponding to the messages transceived in the selected specific term region. In so doing, a key region for receiving a selection of a re-display in the specific term region may be provided to a prescribed region of the screen.

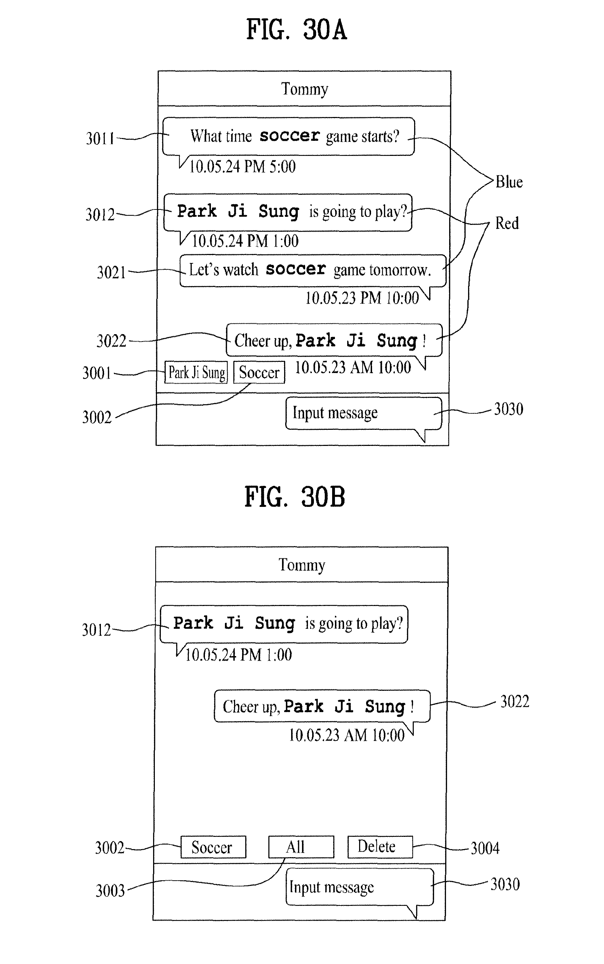

FIG. 30A and FIG. 30B are screen configurations for distinguishably displaying a transmission display window and a reception display window with reference to a specific keyword.

The mobile terminal 100 may distinguishably display a transmission display window or a reception display window using a specific keyword corresponding to the transmission display window or the reception display window. The specific keyword can include one of a keyword previously designated by a user, a proper noun, a popular search word and/or the like. In the following description, assume that the specific keywords are 'Park Ji Sung' and 'soccer'.

Referring to FIG. 30A, the mobile terminal 100 may distinguishably display 'Park Ji Sung' or 'soccer' in contents of messages respectively corresponding to transmission display windows 3021 and 3022 and reception display windows 3011 and 3012.

Alternatively, the mobile terminal 100 may distinguishably display a transmission display window or a reception display window, which includes 'Park Ji Sung' or 'soccer'.

Referring to FIG. 30A, the mobile terminal 100 may display keyword regions 3001 and 3002 corresponding to a specific keyword on a prescribed region of the screen and then receive an input of a selection action on a specific keyword region from a user.

Referring to FIG. 30B, in receiving a selection of the keyword region 3001 corresponding to 'Park Ji Sung' from a user in FIG. 30A, the mobile terminal 100 may only display a transmission display window 3022 and a reception display window 3012, each of which includes 'Park Ji Sung'.

In receiving a selection of the keyword region 3002 corresponding to 'soccer' from a user in FIG. 30A, the mobile terminal 100 may only display a transmission display window 3021 and a reception display window 3011, each of which includes 'soccer'.

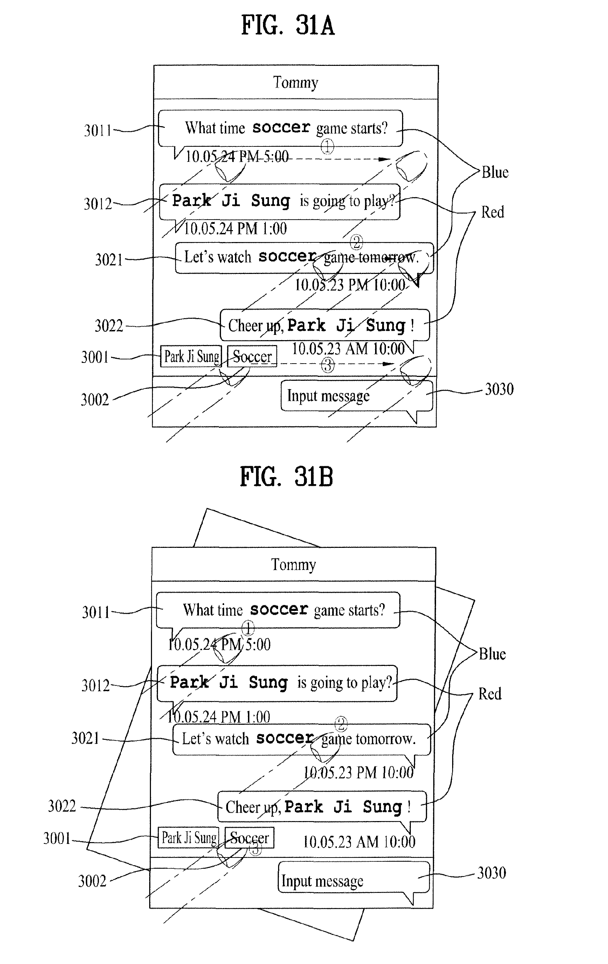

FIGs. 31A to 32B are screen configurations for deleting specific data corresponding to a specific transceiving display window or the specific transceiving display window from a screen.

The mobile terminal 100 may not display data (e.g., portion of a message content, transceiving hour, etc.) included in a specific transmission/reception display window or may not display a specific transmission/reception display window itself.

In the following description, explained is an example that a transceiving hour is not displayed as specific data.

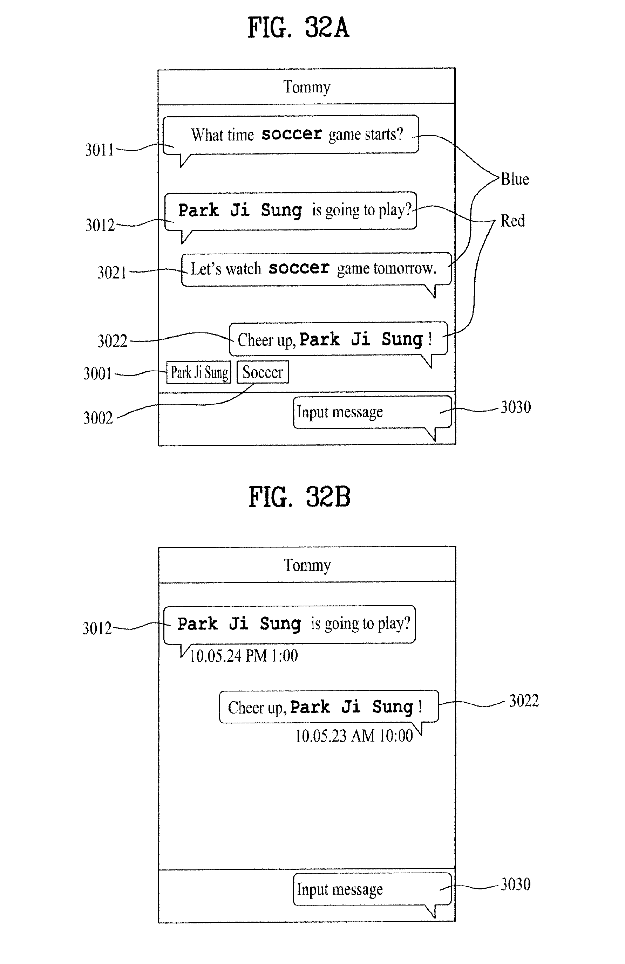

In receiving an input of a touch & drag action in one direction on a display region of a reception hour (or transmission hour) corresponding to a specific reception display window (or a specific transmission display window) [1 in FIG. 31A] or inclining the terminal in one direction after a selection action for a reception hour (or a transmission hour) corresponding to a specific reception display window (or a specific transmission display window) [1 in FIG. 31B], the mobile terminal 100 may not further display transceiving hours corresponding to all reception/transmission display windows [FIG. 32A].

The mobile terminal 100 may not further display a transceiving hour corresponding to the reception/transmission display window currently displayed on the screen only in FIG. 32A.

In an example that a touch target is a reception hour in FIG. 31A or FIG. 31B, the mobile terminal 100 may not further display reception hours corresponding to all reception display windows (or a reception display window currently displayed on the screen) only. In an example that a touch target is a transmission hour in FIG. 31A or FIG. 31B, the mobile terminal 100 may not further display transmission hours corresponding to all transmission display windows (or a transmission display window currently displayed on the screen) only.

In the following description, explained is an example that a specific transmission/reception display window itself is not displayed.

In receiving an input of a touch & drag action in one direction on a transmission display window (or a reception display window) including a specific keyword 'soccer' [2 in FIG. 31A] or inclining the terminal in one direction after a selection action for a transmission display window (or a reception display window) including a specific keyword 'soccer' [3 in FIG. 31B], the mobile terminal 100 may not further display a reception/transmission display window including 'soccer' [FIG. 32B].

In receiving an input of a touch & drag action in one direction on a key region corresponding to a specific keyword 'soccer' [3 in FIG. 31A] or inclining the terminal in one direction after a selection action for a specific key region corresponding to 'soccer' [3 in FIG. 31B], the mobile terminal 100 may not further display a reception/transmission display window including 'soccer' [FIG. 32B].

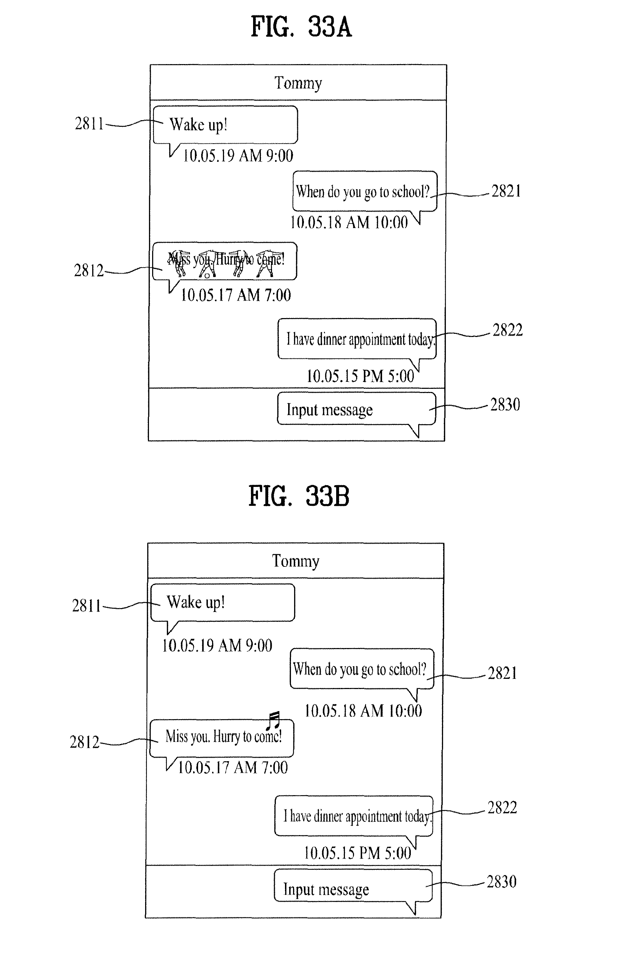

FIG. 33A and FIG. 33B are screen configurations for distinguishably displaying a reception display window of a received message including a multimedia file, in which it is assumed that a multimedia file includes at least one of a photo file and an audio file.

Referring to FIG. 33A, in receiving a message including a photo file from a first counterpart terminal, the mobile terminal 100 may display the included photo file within a corresponding reception display window.

For example, if a plurality of photo files exist, they may be sequentially displayed with a predetermined time interval.

Referring to FIG. 33B, in receiving a message including an audio file from a first counterpart terminal, the mobile terminal 100 displays an indicator 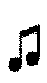 , which indicates that the audio file is included, within a corresponding reception display window. If a cursor is positioned in the corresponding reception display window, the mobile terminal 100 may play back the included audio file.

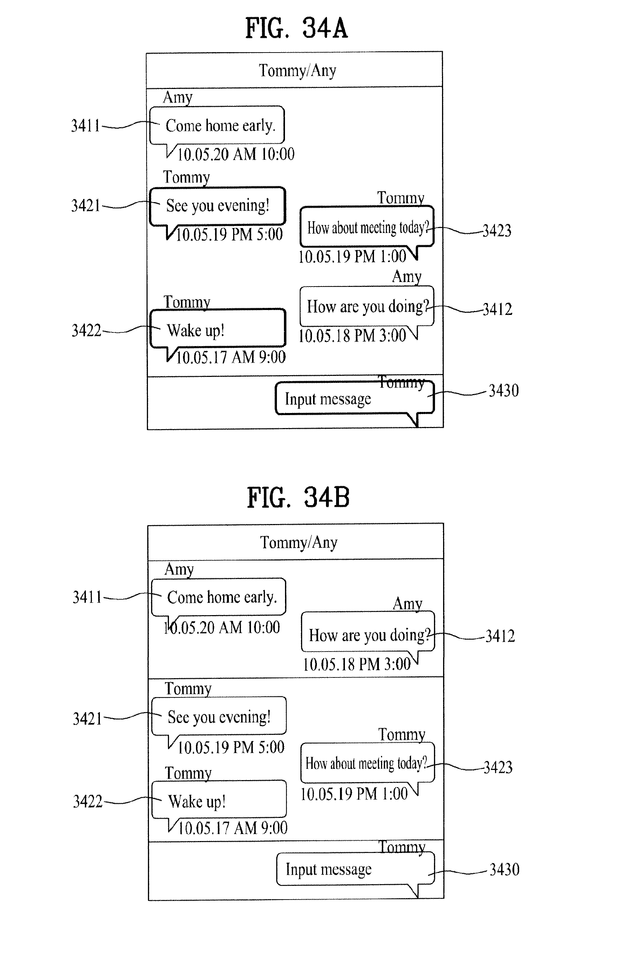

FIG. 34A and FIG. 34B are screen configurations for distinguishably displaying a transmission display window and an input window corresponding to a first one of a plurality of specific counterpart terminals.

For ease of description, assume an example that a plurality of message items corresponding to a plurality of counterpart terminals Tommy and Amy are selected from the counterpart based message list shown in FIG. 28A.

Referring to FIG. 34A, the mobile terminal 100 may display reception display windows 3421 and 3422 corresponding to Tommy, a reception display window 3411 corresponding to Amy, a transmission display window 3423 corresponding to Tommy and a transmission display window 3412 corresponding to Amy.

In this example, in order to distinguish each of the transmission display windows and a message input window 3430 from the reception display windows, the same indicator (e.g., a position of window, a tail position of a word balloon, etc.) is usable. The transmission display window 3423 and the reception display windows 3421 and 3422 corresponding to Tommy may be displayed per counterpart terminal in a manner of distinguished from the transmission display window 3412 and the reception display window 3411 corresponding to Amy.

For example, the transmission display window 3423 and the reception display windows 3421 and 3422 corresponding to Tommy may be displayed thick and the transmission display window 3412 and the reception display window 3411 corresponding to Amy may be displayed thin. As another example, the transmission display window 3423 and the reception display windows 3421 and 3422 corresponding to Tommy may be displayed green and the transmission display window 3412 and the reception display window 3411 corresponding to Amy may be displayed red.

It may distinguishably display the message input window according to who is a transmission counterpart of a message to transmit currently. In attempting to transmit a message to Tommy, a transmission/reception display window corresponding to Tommy and a message input window can include the same indicator to be distinguished from the transmission/reception display window corresponding to Amy.

For example, in case that a transmission counterpart is Tommy, the message input window may be displayed thick or green as good as the transmission display window 3423 and the reception display windows 3421 and 3422 corresponding to Tommy.

Referring to FIG. 34B, the mobile terminal 100 may partition a screen into a plurality of regions. The transmission display window 3412 and the reception display window 3411 corresponding to Amy may be displayed in the first region. The transmission display window 3423 and the reception display windows 3421 and 3422 corresponding to Tommy may be displayed in the second region.

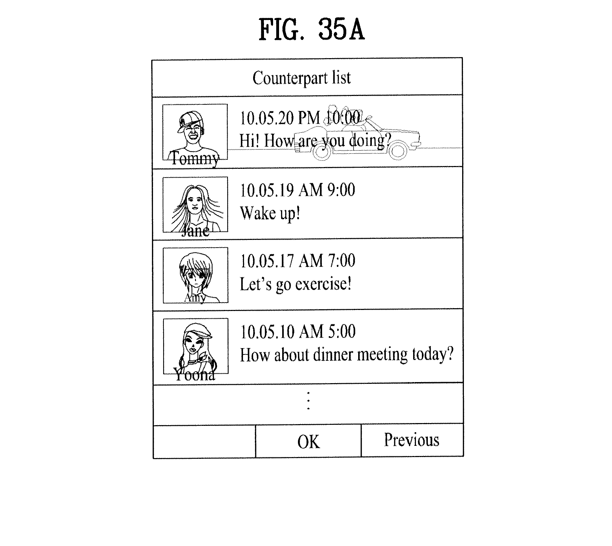

FIGs. 35A to 35C are screen configurations for outputting a multimedia file on a counterpart list.

In receiving a message (hereafter called a multimedia message) including a multimedia file from a specific counterpart terminal, the mobile terminal 100 may output the included multimedia file to a display region of the specific counterpart terminal on a counterpart list.

For ease of description, it is assumed that a multimedia file is a photo file.

Referring to FIG. 35A, in an example that a photo file is included in a latest message received from a first counterpart terminal, the mobile terminal 100 may display the included photo file within a message item corresponding to the first counterpart terminal on a counterpart based message list.

In an example that a plurality of photo files are included, they may be sequentially displayed with a predetermined time interval.

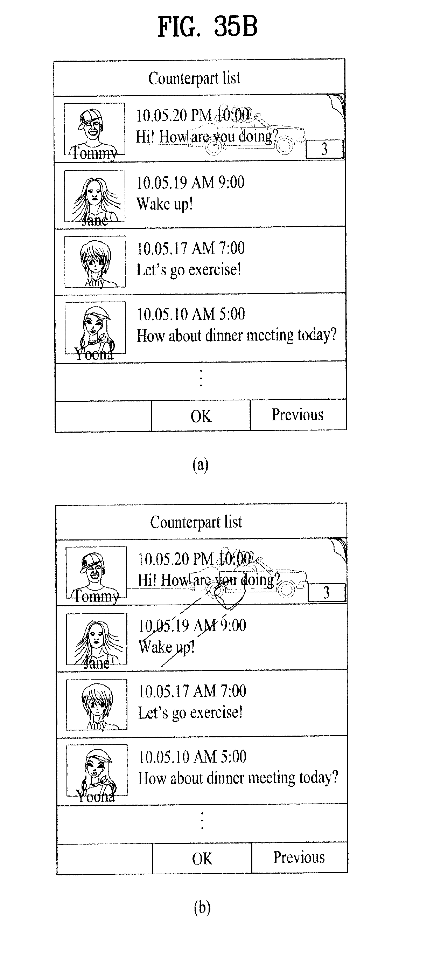

Referring to FIG. 35B, in an example that a plurality of photo files are included in a latest message received from a first counterpart terminal, the mobile terminal 100 may distinguishably display a display region of the first counterpart terminal to indicate that a plurality of the photo files are included (e.g., a book corner shape) [a] or is able to display the number of the included photo files within the display region of the first counterpart terminal [b].

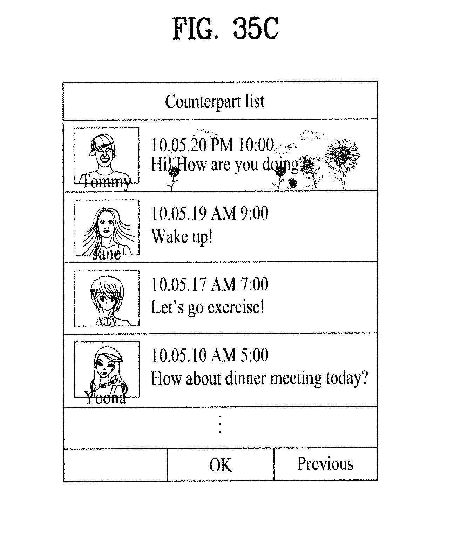

Referring to FIG. 35C, in receiving an input of a next photo display command action in FIG. 35B (a) or FIG. 35B (b), the mobile terminal 100 may display a photo located next to a currently displayed photo.

Referring now to FIG. 27, the mobile terminal 100 may receive, in operation S2750, an input of a transmission command signal for transmitting a message inputted via the message input window via the user input unit 130.

In this example, the transmission command signal may be inputted when a key region or a key corresponding to a transmission command is selected by a user.

In receiving the input of the transmission command signal in the inputting operation S2750, the mobile terminal 100 may transmit, in operation S2760, the message inputted using the message input window to the specific counterpart terminal corresponding to the specific message item selected in the selecting operation S2730. In this example, the transmitting operation S2760 may be performed by the wireless communication unit 110.

Subsequently, under control of the controller 180, the mobile terminal 100 may display the message input window at a random position in the display region of the transmission/reception display window in a manner of gradually shifting, in operation S2770, the message input window to correspond to a transmission extent of the message in the transmitting operation S2760.

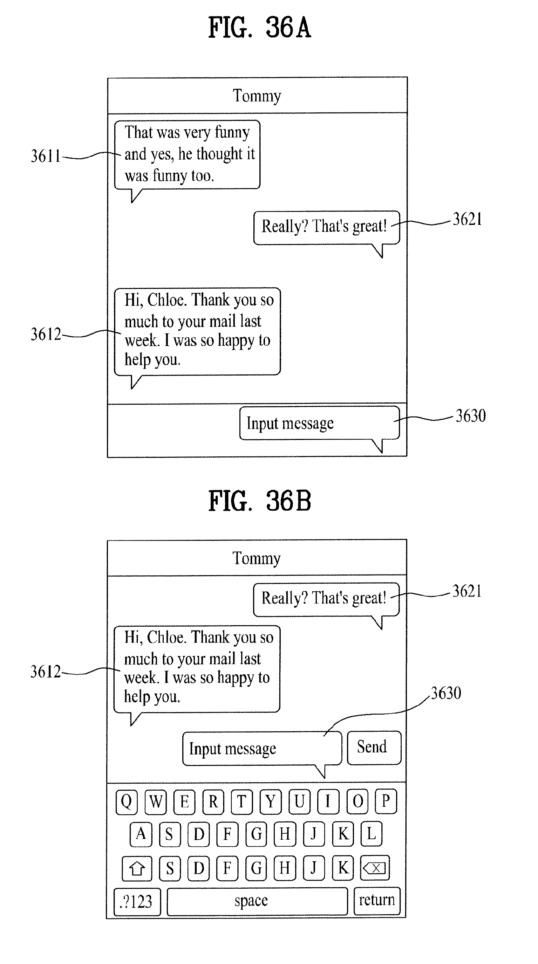

In shifting the message input window, the mobile terminal 100 may shift the message content displayed within the message input window together with the message input window. In so doing, the mobile terminal 100 may display the gradual shift process of the message content displayed within the message input window [cf. FIGs. 36A to 36E].

In shifting the message input window, the mobile terminal 100 may display a new message input window at a position of the original message input window separate from the shifted message window.

If the shift of the message input window is completed, the mobile terminal 100 may switch the message input window to a transmission display window and then display the transmission display window.

For example, if a sorting reference of the transmission/reception display windows is an order of an early or late transceiving hour of a corresponding message, a random position of the shift-completed message input window may include a top or bottom of the transmission display window.

The displaying operation S2770 may be described in detail with reference to FIGs. 36A to 36E as follows.

FIGs. 36A to 36E are screen configurations for a process for switching to a transmission display window by shifting a position of an input window gradually in an example of sending a message to a specific counterpart terminal.

Referring to FIG. 36A, transmission/reception display windows corresponding to messages transceived with a first counterpart terminal and a message input window are displayed.

Referring to FIG. 36A and FIG. 36B, in receiving an input of a message write command signal via the message input window 3630, the mobile terminal 100 may display a virtual keypad on a prescribed region of the screen. Therefore, a user may input a message content using the virtual keypad. The inputted message content may then be displayed within the message input window 3630.

If the mobile terminal 100 is provided with a keypad, a user may directly input a message content using the keypad without input of the message write command signal.

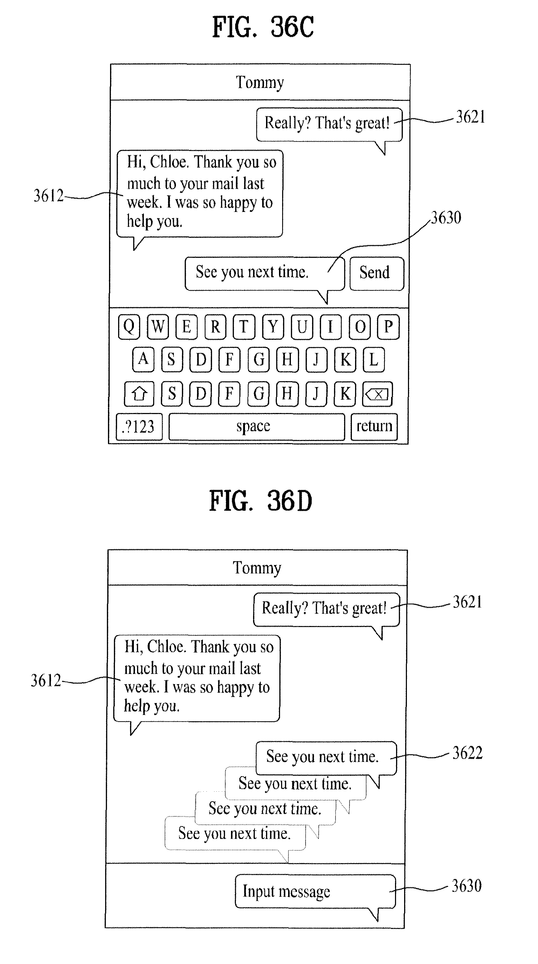

Referring to Fig. 36C and FIG. 36D, in receiving a message transmit command signal after completion of the input of the message content (e.g., a key 'Send' is selected), the mobile terminal 100 may send a message including the inputted message content to the first counterpart terminal. The mobile terminal 100 may arrange the message input window 3630 and the message content displayed in the message input window 3630 in a manner of gradually shifting positions of the message input window 3630 and the corresponding message content therein upward to correspond to the transmission extent of the message.

For example, in an example that the transmission/reception display windows are sorted in order of an early transceiving hour, the message input window is arranged at the bottom of the transmission display windows and are then converted to a transmission display window 3622 to be displayed.

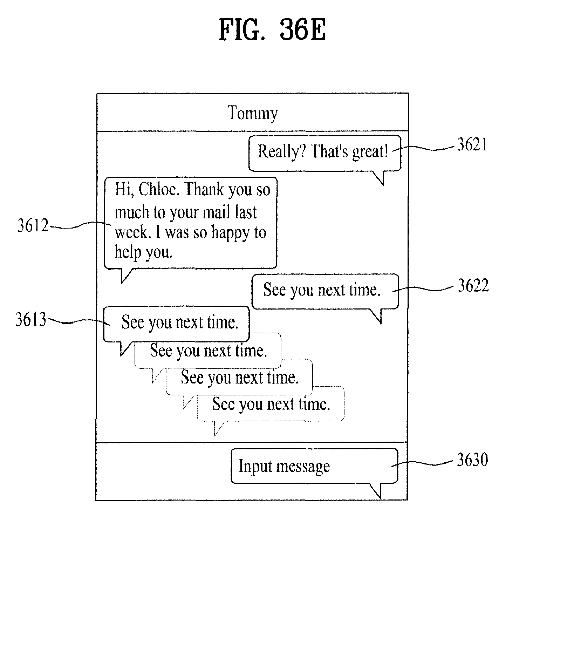

Referring to FIG. 36E, in an example of receiving a message from the first counterpart terminal, the mobile terminal 100 may display the reception display window 3613 corresponding to the received message at the corresponding position from among the reception display windows in a manner of gradually shifting the reception display window 3613 from the bottom or top.

For example, in an example that the transmission/reception display windows are sorted in order of an early transceiving hour, the reception display window may be arranged at the bottom of the reception display windows.

Embodiments of the present invention may provide the following effects and/or advantages.

Since a message item of a counterpart terminal (or an unchecked message) having sent an unchecked message may be displayed at a specific position on a message list regardless of an arrangement reference of message items, a user may quickly check the unchecked message.

Since a message item of a counterpart terminal (or a message received from a priority counterpart terminal) may be displayed at a specific position on a message list regardless of an arrangement reference of message items, a user may check a message received from a specific counterpart terminal with priority.

Since a group message item corresponding to a group including a plurality of counterparts is displayed on a counterpart based message list, messages transceived with a plurality of the counterparts included in one group may be managed as a group instead of being individually managed.

A transmission display window and a message input window may be displayed to be distinguished from a reception display window, whereby a user is intuitively informed that the transmission display window and the message input window are identical to each other in message transmission.

The above-described message list displaying methods may be implemented in a program recorded medium as computer-readable codes. The computer-readable media may include all kinds of recording devices in which data readable by a computer system are stored. The computer-readable media include ROM, RAM, CD-ROM, magnetic tapes, floppy discs, optical data storage devices, and/or the like for example and also include carrier-wave type implementations (e.g., transmission via Internet).

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments may be devised by those skilled in the art that will fall within the scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A mobile terminal (100) comprising:
a user input unit (130);
a wireless communication unit (110) to receive at least one message from each counterpart terminal;
a controller (180) to generate a message list including at least one message item corresponding to each counterpart terminal, the controller (180) to determine whether an unchecked message exists in the received messages; and
a display (151) to display the generated message list when the controller (180) determines that the unchecked message exists, the display (151) to display the message item corresponding to the counterpart terminal having transmitted the unchecked message at a specific position in the message list regardless of an arrangement reference of the message item.

2. The mobile terminal (100) of claim 1, wherein the message item includes at least one of a reception time of a latest message received from the corresponding counterpart terminal, content of the latest message received from the corresponding counterpart terminal, or information on the corresponding counterpart terminal.

3. The mobile terminal (100) of any of claims 1 and 2, wherein when receiving a message from a prescribed one of counterpart terminals belonging to a same group, the message list includes the message item corresponding to the same group to which the prescribed counterpart terminal belongs.

4. The mobile terminal (100) of any of claims 1-3, wherein the arrangement reference of the message item includes at least one of a reception time of the latest message received from the corresponding counterpart terminal or information on the corresponding counterpart terminal.

5. The mobile terminal (100) of any of claims 1-4, wherein the display (151) distinguishably displays the message item corresponding to the counterpart terminal having transmitted the unchecked message on the message list.

6. The mobile terminal (100) of any of claims 1-5, wherein when a plurality of the counterpart terminals having transmitted unchecked messages exist, the display (151) displays the message items respectively corresponding to a plurality of the counterpart terminals at the specific position with reference to at least one of a reception hour of the unchecked message of the counterpart terminal or a number of the unchecked messages of the counterpart terminal.

7. The mobile terminal (100) of any of claims 1-6, wherein the user input unit (130) receives a selection of a specific message item in the displayed message list, wherein the controller (180) generates a per-counterpart message list that includes at least one message transceived with a specific counterpart terminal corresponding to the selected specific message item, and wherein the display (151) displays the generated per-counterpart message list and also displays the unchecked message received from the specific counterpart terminal at a specific position in the per-counterpart message list regardless of a message arrangement reference.

8. The mobile terminal (100) of any of claims 1-7, wherein the user input unit (130) receives a designation of a priority counterpart terminal, and wherein the display (151) displays the message item corresponding to the designated priority counterpart terminal at the specific position in the message list regardless of the arrangement reference of the message item.

9. The mobile terminal (100) of claim 8, wherein the user input unit (130) designates a specific group that includes at least one counterpart terminal to the priority counterpart terminal.

10. The mobile terminal (100) of any of claims 1-9, wherein when the generated message list includes a plurality of message items, the controller (180) configures one group with at least two counterpart terminals corresponding to at least two of a plurality of the message items, and wherein the display (151) displays the message item corresponding to the configured group within the message list and also displays a content of a specific one of a plurality of messages transceived with the at least two counterpart terminals included in the configured group within the message item corresponding to the configured group.

11. The mobile terminal (100) of any of claims 1-10, wherein the user input unit (130) receives a selection action on a specific message item in the message list, wherein the controller (180) controls the display (151) to display a transmission display window of the message transmitted to a specific counterpart terminal corresponding to the selected specific message item, a reception display window of a message received from the specific counterpart terminal and an input window of the message to transmit to the specific counterpart terminal, and wherein each of the transmission display window and the input window includes a same indicator to be discriminated from the reception display window.

12. The mobile terminal (100) of claim 1, wherein the controller (181) generates the message list that includes the at least one message item corresponding to each received message, and wherein the display (151) displays the message item corresponding to the unchecked message at the specific position in the message list regardless of the arrangement reference of the message item.

13. A method of displaying a message list in a mobile terminal, comprising:
receiving at least one message from each counterpart terminal;
generating the message list that includes at least one message item corresponding to each counterpart terminal;
determining whether an unchecked message exists in the received at least one message; and
when it is determined that the unchecked message exists in the received at least one message, displaying the generated message list by displaying the message item corresponding to the counterpart terminal having transmitted the unchecked message at a specific position in the message list regardless of an arrangement reference of the message item.

14. The method of claim 13, further comprising:
receiving a selection of a specific message item in the displayed message list;
generating a per-counterpart message list including at least one message transceived with a specific counterpart terminal corresponding to the selected specific message item; and
displaying the generated per-counterpart message list by displaying the unchecked message received from the specific counterpart terminal at a specific position in the per-counterpart message list regardless of a message arrangement reference.

15. The method of any of claims 13 and 14, further comprising:
receiving a designation of a priority counterpart terminal,
wherein the displaying comprises displaying the message item corresponding to the designated priority counterpart terminal at the specific position in the message list regardless of the arrangement reference of the message item.
